(19)

Europäisches
Patentamt

European
Patent Office

Office européen
des brevets

(11) **EP 1 879 317 A1**

(12) **EUROPEAN PATENT APPLICATION**
published in accordance with Art. 153(4) EPC

(43) Date of publication:
**16.01.2008 Bulletin 2008/03**

(51) Int Cl.:
*H04J 15/00* (2006.01)    *H04B 7/04* (2006.01)

(21) Application number: **06746877.7**

(22) Date of filing: **25.05.2006**

(86) International application number:
**PCT/JP2006/310498**

(87) International publication number:
**WO 2006/126655 (30.11.2006 Gazette 2006/48)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.05.2005 JP 2005152094**

(71) Applicant: **MATSUSHITA ELECTRIC INDUSTRIAL CO., LTD.**
**Osaka 571-8501 (JP)**

(72) Inventors:
• **KIMURA, Ryohei**
  **c/o Matsushita Electric Industrial Co. Ltd**
  **2-1-61 Shiromi, Chuo-ku, Osaka 540-6207 (JP)**
• **HOSHINO, Masayuki**
  **c/o Matsushita Electric Industrial Co. Ltd**
  **2-1-61 Shiromi, Chuo-ku, Osaka 540-6207 (JP)**

• **MIYOSHI, Kenichi**
  **c/o Matsushita Electric Industrial Co. Ltd**
  **2-1-61 Shiromi, Chuo-ku, Osaka 540-6207 (JP)**
• **YUDA, Yasuaki**
  **c/o Matsushita Electric Industrial Co. Ltd**
  **2-1-61 Shiromi, Chuo-ku, Osaka 540-6207 (JP)**
• **IMAI, Tomohiro**
  **c/o Matsushita Electric Industrial Co. Ltd**
  **2-1-61 Shiromi, Chuo-ku, Osaka 540-6207 (JP)**

(74) Representative: **Zimmer, Franz-Josef**
  **Grünecker, Kinkeldey,**
  **Stockmair & Schwanhäusser**
  **Anwaltssozietät**
  **Maximilianstrasse 58**
  **80538 München (DE)**

(54) **RADIO TRANSMITTING APPARATUS, RADIO RECEIVING APPARATUS AND RADIO TRANSMITTING METHOD**

(57)    A radio transmitting apparatus, a radio receiving apparatus and a radio transmitting method wherein the accuracy of detecting streams in D-TxAA is improved. There is included a transmission mode switching part (102) that switches output destinations of first and second input streams (1865,1866) in accordance with the propagation environments of first and second MIMO channel beams (1831, 1832). The transmission mode switching part (102) switches from a D-TxAA mode transmission to a first or second unique mode transmission in accordance with the propagation environments.

FIG. 14

EP 1 879 317 A1

**Description**

Technical Field

The present invention relates to a radio transmitting apparatus, radio receiving apparatus and radio transmission method in the MIMO (Multi-Input Multi-Output) system which carries out information transmission using array antennas in both transmission and reception.

Background Art

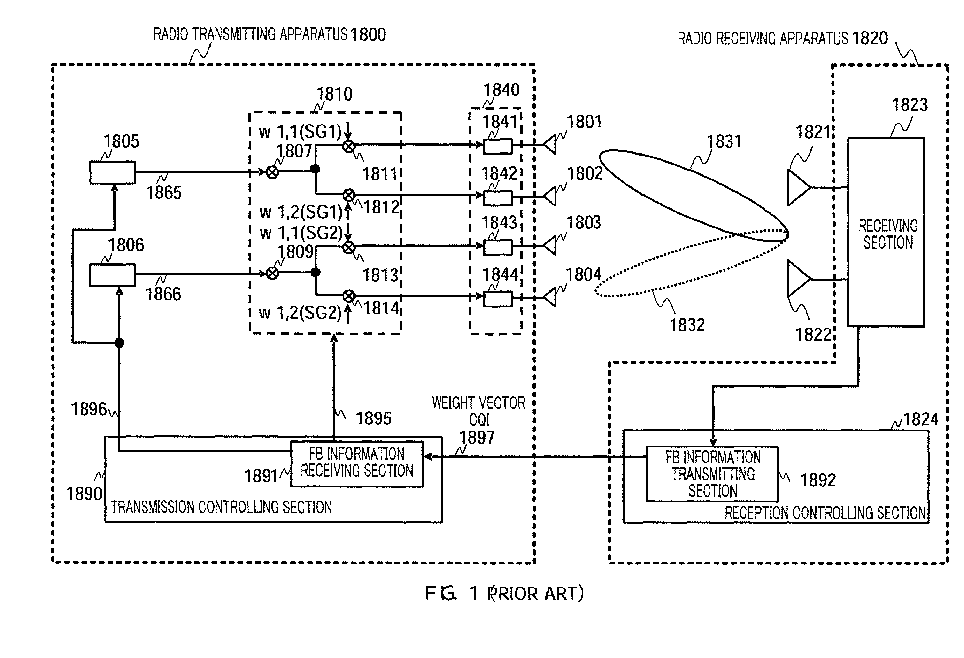

Non-Patent Document 1 discloses a (4, 2) MIMO system using D-TxAA (Double-Transmit Antenna Array) transmission. This MIMO system will be described with reference to FIG.1.

Here, a MIMO system comprised of X transmitting antennas and Y receiving antennas is referred to as a "(X, Y) MIMO system." The (4,2) MIMO system of FIG.1 carries out radio transmission between radio transmitting apparatus 1800 having transmitting antennas 1801 to 1804 and radio receiving apparatus 1820 having receiving antennas 1821 and 1822. Channels 1831 and 1832 through which transmission signals are propagated, are formed between these transmitting antennas and receiving antennas.

Radio transmitting apparatus 1800 has: spreading and weight multiplying section 1810 including spreading sections 1807 and 1809 that perform spreading and scrambling processing on streams 1865 and 1866 generated in first and second stream generating sections 1805 and 1806, and transmission weight multipliers 1811 to 1814 that multiply transmission weights and generate and output transmission weight multiply signals; transmitting section 1840 including RF transmitting sections 1841 to 1844 corresponding to the transmitting antennas, respectively; and transmission controlling section 1890 carrying out modulation control in first and second stream generating sections 1805 and 1806 and transmission weight control in spreading and weight multiplying section 1810.

In first and second stream generating sections 1805 and 1806 of radio transmitting apparatus 1800, an error correction coding section, an interleaving section and a data mapping section (not shown) perform error correction coding on the streams of generated bit sequences, perform interleaving processing for rearranging the bits and output two streams 1865 and 1866 after data mapping processing which is data modulation processing using QPSK and 16 QAM.

Here, the modulation level is determined according to propagation channel information (hereinafter referred to as "CQI information") 1896 reported from feedback information receiving section (hereinafter referred to as "FB information receiving section") 1891 of transmission controlling section 1890. Then, using spreading code and scrambling code, spreading sections 1807 and 1809 convert two streams 1865 and 1866, which are symbol sequence streams, into a plurality of chip sequence streams and carry out code multiplexing. Further, in transmitting section 1840, a pilot signal multiplexing section and an RF transmitting section (not shown) add a pilot signal to each transmission weight multiplier output and then convert the output into radio signals by predetermined modulation.

This system transmits stream 1865 using transmitting antennas 1801 and 1802 and transmits stream 1866 using transmitting antennas 1803 and 1804. Here, the combination of transmitting antennas 1801 and 1802 is referred to as "subgroup 1" (hereinafter, referred to as" SG1") and the combination of transmitting antennas 1803 and 1804 is referred to as "subgroup 2" (hereinafter, referred to as "SG2").

Radio receiving apparatus 1820 employs a configuration including receiving section 1823 and reception controlling section 1824 that has feedback information transmitting section (hereinafter referred to as "FB information transmitting section") 1892 which generates transmission and reception weights and feeds back to the radio transmitting apparatus 1800 side feedback information 1897 including CQI information comprising channel information and first and second eigenvector information. Furhter, radio receiving apparatus 1820 carries out demultiplexing by despreading the received signals subjected to spatial multiplexing.

The above (4,2) MIMO system using D-TxAA mode transmission performs eigenvalue decomposition on channel correlation matrices of SG1 and SG2 and transmits the result using the first eigenvector as transmission weights. FB information transmitting section 1892 generates transmission weight information and CQI information used for SG1 and SG2.

The method of calculating transmission weights and reception weights used for SG1 will be described. The transmission characteristics of the transmission signal channel formed with transmitting antennas 1801 and 1802 and receiving antennas 1821 and 1822 and channel 1831 through which transmission signals are propagated between these transmitting antennas and the receiving antennas, are generally expressed by a matrix referred to as a "channel matrix." This channel matrix is $H^{(SG1)}$ and is expressed by equation 1.

[1]

$$\mathbf{H}^{(SG1)} = \begin{pmatrix} h_{1,1}^{(SG1)} & h_{2,1}^{(SG1)} \\ h_{1,2}^{(SG1)} & h_{2,2}^{(SG1)} \end{pmatrix} \dots (Equation\ 1)$$

Transmission weights and reception weights are calculated by performing eigenvalue decomposition on correlation of the channel matrix expressed by this equation 1, that is, the channel correlation matrix expressed by equation 2. H attached to upper right of "SG1" is an operator representing the complex conjugate of the corresponding matrix.

[2]

$$\mathbf{H}^{(SG1)^{H}} \mathbf{H}^{(SG1)} \dots (Equation\ 2)$$

Equation 2 can be expressed by equation 5 by using the eigenvalue matrix of equation 3 where all elements other than the elements on the diagonal line in the matrix become zero, the weight matrix of equation 4 and the complex conjugate matrix of the weight matrix of equation 4.

[3]

$$\begin{pmatrix} \lambda_1^{(SG1)} & 0 \\ 0 & \lambda_2^{(SG1)} \end{pmatrix} \dots (Equation\ 3)$$

[4]

$$\begin{pmatrix} \mathbf{w}_1^{(SG1)} & \mathbf{w}_2^{(SG1)} \end{pmatrix} \dots (Equation\ 4)$$

[5]

$$\mathbf{H}^{(SG1)^{H}} \mathbf{H}^{(SG1)} = \begin{pmatrix} \mathbf{w}_1^{(SG1)} & \mathbf{w}_2^{(SG1)} \end{pmatrix} \begin{pmatrix} \lambda_1^{(SG1)} & 0 \\ 0 & \lambda_2^{(SG1)} \end{pmatrix} \begin{pmatrix} \mathbf{w}_1^{(SG1)} & \mathbf{w}_2^{(SG1)} \end{pmatrix}^{H} \dots (Equation\ 5)$$

When the weight matrix of equation 4 is multiplied on the right side of equation 5 and the complex conjugate matrix of the weight matrix of equation 4 is multiplied on the left sides of equation 5, equation 6 can be obtained and the right side of equation 6 becomes the eigenvalue matrix alone.

[6]

$$\begin{pmatrix} \mathbf{w}_1^{(SG1)} & \mathbf{w}_2^{(SG1)} \end{pmatrix}^{H} \mathbf{H}^{(SG1)^{H}} \mathbf{H}^{(SG1)} \begin{pmatrix} \mathbf{w}_1^{(SG1)} & \mathbf{w}_2^{(SG1)} \end{pmatrix} = \begin{pmatrix} \lambda_1^{(SG1)} & 0 \\ 0 & \lambda_2^{(SG1)} \end{pmatrix} \dots (Equation\ 6)$$

Equation 6 can be divided into the part corresponding to the first eigenvalue (equation 7) and the part corresponding to the second eigenvalue (equation 8).

[7]

$$\mathbf{w}_1^{(SG1)^H} \mathbf{H}^{(SG1)^H} \mathbf{H}^{(SG1)} \mathbf{w}_1^{(SG1)} = \begin{pmatrix} \lambda_1^{(SG1)} \\ 0 \end{pmatrix} \cdots (\text{Equation } 7)$$

[8]

$$\mathbf{w}_2^{(SG1)^H} \mathbf{H}^{(SG1)^H} \mathbf{H}^{(SG1)} \mathbf{w}_2^{(SG1)} = \begin{pmatrix} 0 \\ \lambda_2^{(SG1)} \end{pmatrix} \cdots (8)$$

Here, the matrix of equation 9 and the matrix of equation 10 can be expressed by equation 11 and equation 12, respectively.

[9]

$$\mathbf{w}_1^{(SG1)} \cdots (\text{Equation } 9)$$

[10]

$$\mathbf{w}_2^{(SG1)} \cdots (\text{Equation } 10)$$

[11]

$$\mathbf{w}_1^{(SG1)} = \begin{pmatrix} w_{1,1}^{(SG1)} \\ w_{1,2}^{(SG1)} \end{pmatrix} \cdots (\text{Equation } 11)$$

[12]

$$\mathbf{w}_2^{(SG1)} = \begin{pmatrix} w_{2,1}^{(SG1)} \\ w_{2,2}^{(SG1)} \end{pmatrix} \cdots (\text{Equation } 12)$$

On the left side of equation 7, the last matrix (equation 9) is used as the transmission weight for SG1 using the first eigenvalue, and the matrices from the first to the second one (equation 13), that is, the complex conjugate of the channel matrix of equation 1 multiplied by the complex conjugate of equation 9, are used as the reception weights corresponding to SG1 using the first eigenvalue, respectively.
The above transmission weight for SG1 can be alternately expressed as in equation 13 and the corresponding reception weight can be alternately expressed as in equation 14.

[13]

$$\mathbf{w}_1^{(SG1)} = \left( w_{1,1}^{(SG1)}, w_{1,2}^{(SG1)} \right)^T \dots (Equation\ 13)$$

[14]

$$\left( \mathbf{H}^{(SG1)} \mathbf{w}_1^{(SG1)} \right)^H \dots (Equation\ 14)$$

Further, the transmission weight for SG1 using the second eigenvalue from equation 8 is expressed by equation 15 and the corresponding reception weight is expressed by equation 16, respectively.

[15]

$$\mathbf{w}_2^{(SG1)} = \left( w_{2,1}^{(SG1)}, w_{2,2}^{(SG1)} \right)^T \dots (Equation\ 15)$$

[16]

$$\left( \mathbf{H}^{(SG1)} \mathbf{w}_2^{(SG1)} \right)^H \dots (Equation\ 16)$$

The channel matrix representing transmission characteristics of the transmission signal channel formed with transmitting antennas 1803 and 1804, receiving antennas 1821 and 1822 and channel 1832, is expressed by equation 17, and can be derived by the same steps as the steps of obtaining above equation 2 to equation 16. The transmission weight for SG2 using the first eigenvalue is expressed by equation 18 and the corresponding reception weight is expressed by equation 19. Further, the transmission weight for SG2 using the second eigenvalue is expressed by equation 20 and the corresponding reception weight is expressed by equation 21.

[17]

$$\mathbf{H}^{(SG2)} = \begin{pmatrix} h_{1,1}^{(SG2)} & h_{2,1}^{(SG2)} \\ h_{1,2}^{(SG2)} & h_{2,2}^{(SG2)} \end{pmatrix} \dots (Equation\ 17)$$

[18]

$$\mathbf{w}_1^{(SG2)} = \left( w_{1,1}^{(SG2)}, w_{1,2}^{(SG2)} \right)^T \dots (Equation\ 18)$$

[19]

$$\left( \mathbf{H}^{(SG2)} \mathbf{w}_1^{(SG2)} \right)^H \dots (Equation\ 19)$$

[20]

$$\mathbf{w}_2^{(SG2)} = \left( w_{2,1}^{(SG2)}, w_{2,2}^{(SG2)} \right)^T \ldots \text{(Equation 20)}$$

[21]

$$\left( \mathbf{H}^{(SG2)} \mathbf{w}_2^{(SG2)} \right)^H \ldots \text{(Equation 21)}$$

Next, derived transmission weight information of SG1 and SG2 is returned to FB information receiving section 1891. Based on these information, FB information receiving section 1891 sends out transmission weight information 1895 by which signals transmitted through transmitting antennas are multiplied, to spreading and weight multiplying section 1810.

After spreading and weight multiplying section 1810 branches the signal inputted from spreading section 1807 into two, multiplier 1811 corresponding to transmitting antenna 1801 multiplies the left side element of equation 13 as a transmission weight and multiplier 1812 corresponding to transmitting antenna 1802 multiplies the right side element of equation 13 as a transmission weight.

Further, after the signal inputted from spreading section 1809 is branched into two, multiplier 1813 corresponding to transmitting antenna 1803 multiplies the left side element of equation 18 as a transmission weight and multiplier 1814 corresponding to transmitting antenna 1804 multiplies the right side element of equation 18 as a transmission weight.

Radio receiving apparatus 1820 demultiplexes and restores streams 1865 and 1866 by multiplying the received signals subjected to spatial multiplexing by the reception weights and further despreading the multiplication result.

Moreover, besides the above method, as a transmission method for a MIMO system, eigen-mode transmission which multiplies two streams by the transmission weights calculated from the first and second eigenvalue and carries out eigen-mode transmission using two transmitting antennas is known. Non-Patent Document 1: 3GPP TR25.876, "Multi-Input Multi-Output in UTRA"

Disclosure of Invention

Problems to be Solved by the Invention

However, in above radio transmitting apparatus 1800 and radio receiving apparatus 1820 in the MIMO system, when there is a great difference between the received quality of stream 1865 and stream 1866 (for example, between the received SINR' s or eigenvalues of a channel correlation matrix), even if streams having poor received quality are despread, interference of streams having good received quality cannot be reduced and as a result there is a problem that streams having poor received quality cannot be accurately detected.

It is therefore an object of the present invention to provide a radio transmitting apparatus, radio receiving apparatus and radio transmission method that improve the performance of stream detection in D-TxAA.

Means for Solving the Problem

The radio transmitting apparatus of the present invention employs a configuration including: a plurality of transmitting antennas; a transmission mode determining section that determines one transmission mode of an eigen mode transmission using the plurality of transmitting antennas and a double transmit antenna array mode transmission, based on information fed back from a communicating party; and a transmitting section that transmits streams by switching to the determined transmission mode.

The radio receiving apparatus of the present invention employs a configuration in which based on channel environment information of streams comprising the fed back information, the transmission mode determining section determines the double transmit antenna array mode transmission mode when a quality difference between streams transmitted from subgroup antennas is less than a predetermined threshold value and determines eigen mode transmission using subgroup antennas having high quality when the quality difference is equal to or greater than the predetermined threshold value.

The radio transmission method of the present invention includes a transmission mode determining step of determining one transmission mode of an eigen mode transmission using a plurality of transmitting antennas and a double transmit antenna array mode transmission, based on information fed back from a communicating party; and a transmitting step of transmitting streams by switching to the determined transmission mode.

Advantageous Effect of the Invention

The present invention makes it possible to improve the performance of stream detection in D-TxAA transmission.

Brief Description of Drawings

FIG.1 is a conceptual diagram illustrating configurations of a conventional radio transmitting apparatus and radio receiving apparatus;
FIG.2 is a block diagram showing configurations of the radio transmitting apparatus and radio receiving apparatus in a MIMO system according to Embodiment 1 of the present invention;
FIG.3 shows a detailed configuration of the transmission controlling section of the radio transmitting apparatus according to Embodiment 1 of the present invention;
FIG.4 shows a detailed configuration of the receiving section of the radio receiving apparatus according to Embodiment 1 of the present invention;
FIG.5 shows a detailed configuration of the reception controlling section of the radio receiving apparatus according to Embodiment 1 of the present invention;
FIG. 6A is a flowchart of transmission mode selection using a selection method using an eigenvalue of a subgroup as a reference in the radio transmitting apparatus according to Embodiment 1 of the present invention;
FIG. 6B is a flowchart using a selection method using an SINR as a reference in the radio transmitting apparatus according to Embodiment 1 of the present invention;
FIG.7 is a sequence diagram showing controlling steps of the radio transmitting apparatus and radio receiving apparatus according to Embodiment 1 of the present invention;
FIG.8 is a block diagram showing configurations of the radio transmitting apparatus and radio receiving apparatus in a MIMO system according to Embodiment 2 of the present invention;
FIG.9 shows a detailed configuration of the transmission controlling section of the radio transmitting apparatus according to Embodiment 2 of the present invention;
FIG.10 shows a detailed configuration of the receiving section of the radio receiving apparatus according to Embodiment 2 of the present invention;
FIG.11 shows a detailed configuration of the receiving controlling section of the radio receiving apparatus according to Embodiment 2 of the present invention;
FIG.12 is a sequence diagram showing controlling steps of the radio transmitting apparatus and the radio receiving apparatus according to Embodiment 2 of the present invention;
FIG.13 illustrates a feedback format used in transmission and reception in the radio transmitting apparatus and the radio receiving apparatus according to Embodiment 2 of the present invention;
FIG.14 is a block diagram showing configurations of the radio transmitting apparatus and the radio receiving apparatus of a MIMO system according to Embodiment 3 of the present invention;
FIG.15 shows a detailed configuration of the transmission controlling section of the radio transmitting apparatus according to Embodiment 3 of the present invention;
FIG.16 shows a detailed configuration of the receiving section of the radio receiving apparatus according to Embodiment 3 of the present invention;
FIG.17 shows a detailed configuration of the reception controlling section of the radio receiving apparatus according o Embodiment 3 of the present invention; and
FIG.18 illustrates retransmission rearrangement tables used in transmission and reception in the radio transmitting apparatus and radio receiving apparatus according to Embodiment 3 of the present invention.

Best Mode for Carrying Out the Invention

Embodiments of the present invention will be described now in detail with reference to the accompanying drawings. Here, in the embodiments, components having the same functions will be assigned the same reference numerals and overlapping description will be omitted.

(Embodiment 1)

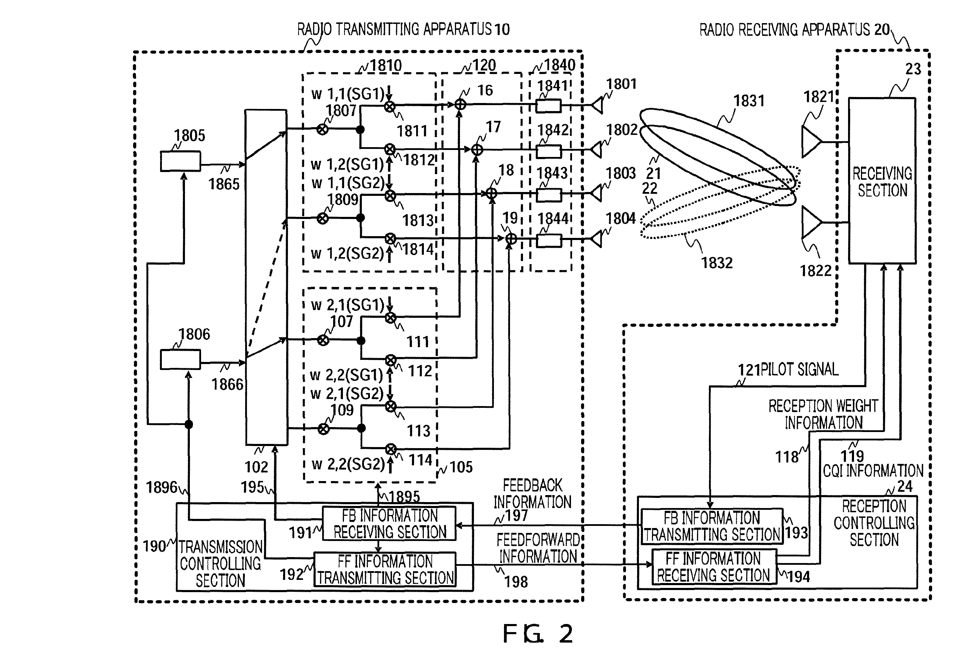

FIG.2 is a block diagram showing configurations of radio transmitting apparatus 10 and radio receiving apparatus 20 in a MIMO system according to Embodiment 1 of the present invention. In this figure, radio transmitting apparatus 10 further has spreading and weight multiplying section 105 of the second system, multiplexing section 120, transmission mode switching section 102 and transmission controlling section 190 including FB information receiving section 191 and feedforward information transmitting section (hereinafter, referred to as "FF information transmitting section") 192 which send out transmission mode switching signals in addition to CQI information 1896 and transmission weight information 1895. Here, for ease of explanation, spreading and weight multiplying section 1810 on the radio transmitting apparatus 10 side will be referred to as "spreading and weight multiplying section 1810 of the first system."

Further, radio receiving apparatus 20 has receptioncontrollingsection24includingFBinformation transmitting section 193 which sends out a channel matrix as feedback information 197 and feedforward information receiving section (hereinafter, "FF information receiving section") 194 which receives feedforward information 198 transmitted from FF information transmitting section 192, and receiving section 23 carrying out despreading processing and demodulation processing based on feedforward information 198.

Spreading and weight multiplying section 105 of the second system has spreading sections 107 and 109 and transmission weight multipliers 111 to 114 sending out transmission weight multiply signals obtained by multiplying the outputs of spreading sections 107 and 109 by predetermined transmission weights to corresponding transmitting antennas 1801 to 1804.

After the signal inputted from spreading section 107 is branched into two, multiplier 111 corresponding to transmitting antenna 1801 multiplies the left side element of equation 15 as a transmission weight. Further, multiplier 112 corresponding to transmitting antenna 1802 multiplies the right side element of equation 15 as a transmission weight.

On the other hand, after the signal inputted from spreading section 109 is branched into two, multiplier 113 corresponding to transmitting antenna 1803 multiplies the left side element of equation 20 as a transmission weight. Further, multiplier 114 corresponding to transmitting antenna 1804 multiplies the right side element of equation 20 as a transmission weight.

Here, spreading section 1807 and transmission weight multipliers 1811 and 1812 have the function (not shown) of generating MIMO channel beams using the first eigenvalue using SG1 and therefore will be referred to as "first transmission beam signal generating sections." Further, spreading section 1809 and transmission weight multipliers 1813 and 1814 have the function of generating MIMO channel beams using the first eigenvalue using SG2 and therefore will be referred to as "second transmission weight beam signal generating sections."

Similarly, spreading section 107 and transmission weight multipliers 111 and 112 have the function of generating MIMO channel beams using the second eigenvalue using SG1 and therefore will be referred to as "third transmission beam signal generating sections." Further, spreading section 109 and transmission weight multipliers 113 and 114 have the function of generating MIMO channel beams using the second eigenvalue using SG2 and therefore will be referred to as the "fourth transmission beam signal generating sections."

Multiplexing section 120 sends out multiplex signals obtained by multiplexing output signals from transmission weight multipliers 1811 to 1814 in spreading and weight multiplying section 1810 of the first system with corresponding output signals from transmission weight multipliers 111 to 114 in spreading and weight multiplying section 105 of the second system, to corresponding transmitting sections 1841 and 1844.

In response to transmission mode switching signal 195 outputted from FB information receiving section 191, transmission mode switching section 102 switches first stream 1865 and second stream 1866 and outputs the streams to predetermined spreading sections out of spreading sections 1807, 1809, 107 and 109 to enter a predetermined transmission mode.

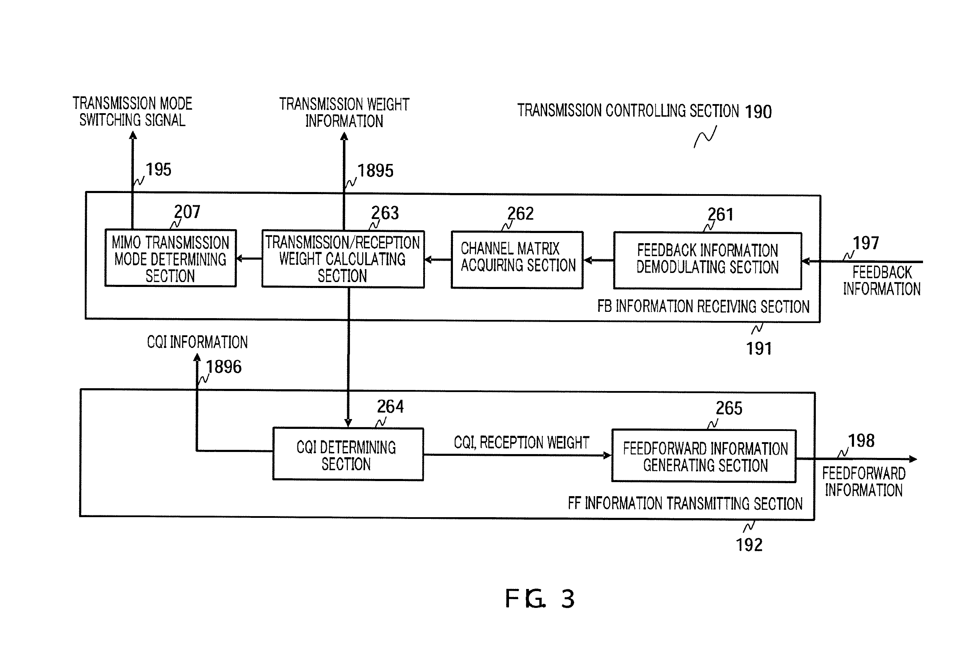

FIG.3 shows a detailed configuration of transmission controlling section 190. Transmission controlling section 190 has FB information receiving section 191 and FF information transmitting section 192. FB information receiving section 191 has feedback information demodulating section 261 receiving feedback information 197 from reception controlling section 24 and demodulating channel matrix information, channel matrix acquiring section 26 acquiring a channel matrix based on the channel matrix information outputted from feedback information demodulating section 261, transmission weight calculating section 263 calculating transmission and reception weights based on the acquired channel matrix, and MIMO transmission mode determining section 207.

FF information transmitting section 192 has CQI determining section 264 determining CQI information 1896 based on reception weight information outputted from transmission and reception weight calculating section 263, and feedforward information generating section 265 sending out to reception controlling section 24 feedforward information 198 including the reception weight information and CQI information.

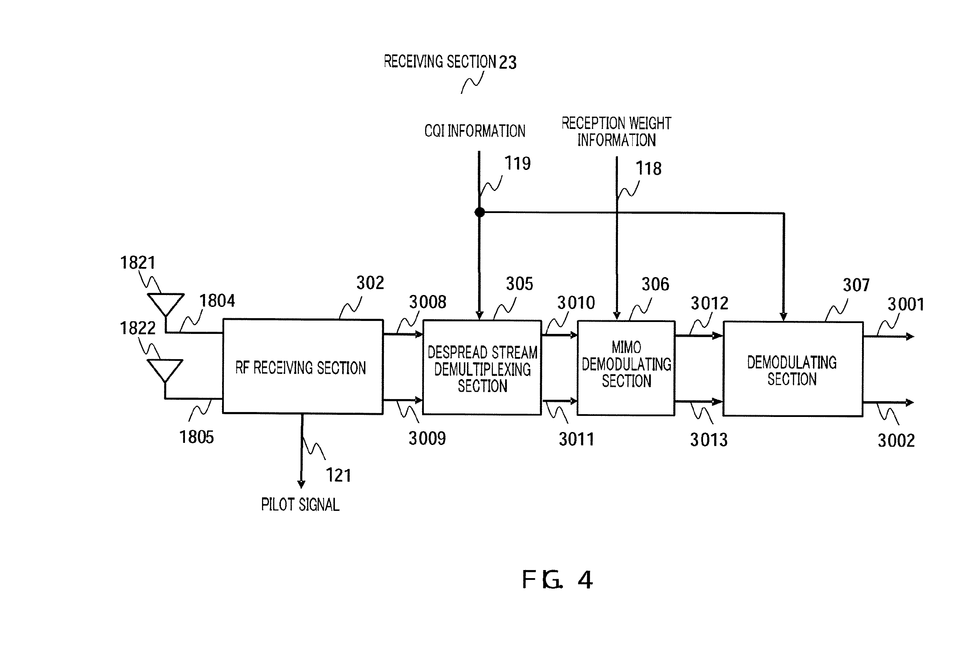

FIG.4 4 shows a detailed configuration of receiving section 23. Receiving section 23 is connected with receiving antennas 1821 and 1822 and employs a configuration including RF receiving section 302, despread stream demultiplexing section 305, MIMO demodulating section 306 and demodulating section 307.

RF receiving section 302 down-converts RF signals 1804 and 1805 received at antennas 1821 and 1822, then extracts pilot signal 121 in the frame by a pilot signal extracting section (not shown) and sends out the result to FB information receiving section 191. Further, the signals from which pilot signal 121 are removed are sent out to despread stream demultiplexing section 305.

Despread stream demultiplexing section 305 outputs to MIMO demodulating section 306 despread signals 3010 and 3011 obtained by multiplying the signals outputted fromRF receiving section 302 by spreading codes and scrambling codes based on CQI information 119 from FF information receiving section 194.

Further, in D-TxAA mode transmission, this despread stream demultiplexing section 305 has the function of demultiplexing streams using spreading code. In contrast with this, in eigen-mode transmission, MIMO demodulating section 306 carries out the stream demultiplexing, and despread stream demultiplexing section 305 carries out multiplication using only scrambling codes. In this case, demodulation can be carried out without problem if multiplication is carried out using spreading codes.

MIMO demodulating section 306 performs stream demodulation on despread signals 3010 and 3011 outputted from despread stream demultiplexing section 305, based on reception weight information 118 from FF information receiving section 194, and outputs stream demodulated signals 3012 and 3013 to demodulating section 307. Further, in eigen-mode transmission, MIMO demodulating section 306 has the function of performing stream demultiplexing on the first eigen beam and the second eigen beam.

In demodulating section 307, after stream demodulated signals 3012 and 3013 outputted from MIMO demodulating section 306 are demapped based on CQI information 119 from FF information receiving section 194 in a data mapping section (not shown), deinterleaving processing and error correction decoding processing are performed in a deinterleaving section and an error correction decoding section (not shown) and received streams 3001 and 3002 are outputted.

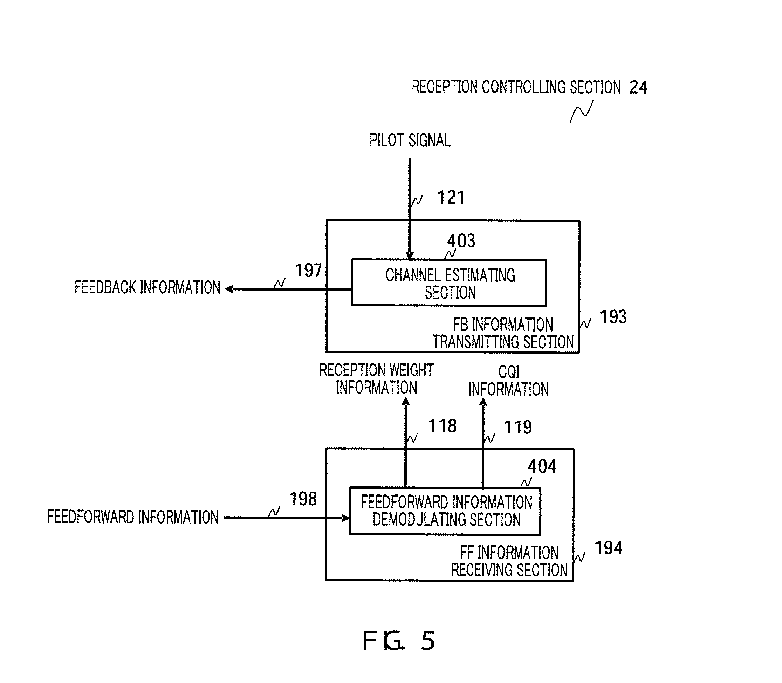

FIG. 5 shows a detailed configuration of reception controlling section 24. Reception controlling section 24 has FB information transmitting section 193 and FF information receiving section 194. FB information transmitting section 193 has channel estimating section 403 estimating channel matrix information based on pilot signal 121 outputted from RF transmitting section 302. FF information receiving section 194 has feedforward information demodulating section 404, which extracts CQI information 119 and reception weight information 118 from feedforward information 198 transmitted from FF information transmitting section 192 and sends out the result to receiving section 23.

Radio transmitting apparatus 10 and radio receiving apparatus 20 configured as described above in a MIMO system will be described with reference to FIGS 2 to 5.

FIG.2 shows that D-TxAA mode transmission is selected at first and assumes that stream 1865 is transmitted through transmission path 1831 using transmitting antennas 1801 and 1802 and stream 1866 is transmitted through transmission path 1832 using transmitting antennas 1803 and 1804 to radio receiving apparatus 20. That is, transmission mode switching section 102 outputs first stream 1865 to spreading section 1807 and second stream 1866 to spreading section 1809 on the spreading and weight multiplying section 1810 side of the first system.

However, a case will occur where, in the middle of communication, when cars get in transmission path 1832 and the transmission environment changes significantly, the received quality of stream 1866 transmitted through transmission path 1832 becomes poor compared to the received quality of stream 1865 transmitted through transmission path 1831. If D-TxAA mode transmission is carried out in such an environment, it is difficult to detect stream 1866. At this time, FB information receiving section 191 of radio transmitting apparatus 10 detects that the received quality of stream 1866 becomes poor based on feedback information 197, which is channel matrix information transmitted from FB information transmitting section 193 of radio receiving section 20, and outputs transmission mode switching signal 195 to transmission mode switching section 102 in order to switch D-TxAA mode transmission to eigen-mode transmission.

Transmission mode switching section 102 receives transmission mode switching signal 195 outputted from FB information receiving section 191, switches second stream 1866 from spreading section 1809 on the spreading and weight multiplying section 1810 side of the first system to spreading section 107 on the spreading and weight multiplying section 105 side of the second system and outputs the result.

Spreading section 107 performs on inputted stream 1866 the same spreading processing and scrambling processing as in spreading section 1809, and transmission weight multipliers 111 and 112 of spreading and weight multiplying section 105 of the second system multiplies transmission weights. For these transmission weights, different transmission weights from the transmission weights used in spreading and weight multiplying section 1810 of the first system are used. That is, transmission weights (equation 15) using the second eigenvalue of the channel correlation matrix of equation 2 are used as transmission weights.

Hereinafter, a stream transmitted using the first eigenvector (equation 9) of the channel correlation matrix of equation 2 as the transmission weight is referred to as a "first eigen beam of SG1" and a stream transmitted using the second eigenvector (equation 13) as the transmission weight is referred to as a "second eigen beam of SG1."

Similarly, a stream transmitted using the first eigenvector (equation 18) of the channel correlation matrix of equation 17 as the transmission weight is referred to as a "first eigen beam of SG2," and a stream transmitted using the second eigenvector (equation 20) as the transmission weight is referred to as a "second eigen beam of SG2."

In spreading and weight multiplying section 105 of the second system, after the signal from spreading section 107 is branched into two, multiplier 111 corresponding to transmitting antenna 1801 multiplies the left side element of equation 15 as the transmission weight and multiplier 112 corresponding to transmitting antenna 1802 multiplies the right side element of equation 15 as the transmission weight.

In this way, while stream 1865 is transmitted to the radio receiving section 20 side through transmission path 1831 using the first eigen beam of SG1 from transmitting antennas 1801 and 1802, stream 1866 is transmitted to the radio receiving apparatus 20 side through transmission path 21, which is substantially the same as transmission path 1831 and which is different from transmission path 1832, using the second eigen beam from same transmitting antennas 1801 and 1802.

In contrast with this, when the received quality of stream 1865 transmitted through transmission path 1831 becomes poor compared to the received quality of stream 1866 transmitted from transmission path 1832, FB information receiving section 191 of radio receiving apparatus 10 detects that the received quality of stream 1865 deteriorates, based on the channel matrix information transmitted from FB information transmitting section 193 of radio receiving apparatus 20 and outputs transmission mode switching signal 195 to transmission mode switching section 102 such that D-TxAA mode transmission is switched to eigen-mode transmission.

Transmission mode switching section 102 receives transmission mode switching signal 195 outputted from FB information receiving section 191, switches first stream 1865 from spreading section 1807 on the spreading and weight multiplying section 1810 side of the first system to spreading section 109 on the spreading and weight multiplying section 105 side of the second system and outputs the result.

Spreading section 109 performs on inputted stream 1865 the same spreading processing and scrambling processing as in spreading section 1807. Then, after the signal from spreading section 109 is branched into two, the left side element of equation 20 is multiplied in multiplier 113 corresponding to transmitting antenna 1803 as the transmission weight and the right side element of equation 20 is multiplied in multiplier 114 corresponding to transmitting antenna 1804 as the transmission weight.

In this way, while stream 1866 is transmitted to the radio receiving apparatus 20 side through transmission path 1832 using the first eigen beam of SG2 from transmitting antennas 1803 and 1804, stream 1865 is transmitted to the radio receiving apparatus 20 side through transmission path 22, which is substantially the same as transmission path 1832 and which is different from transmission path 1831, using the second eigen beam of SG2 from transmitting antennas 1803 and 1804.

The configurations and operations of radio transmitting apparatus 10 and radio receiving apparatus 20 have been described.

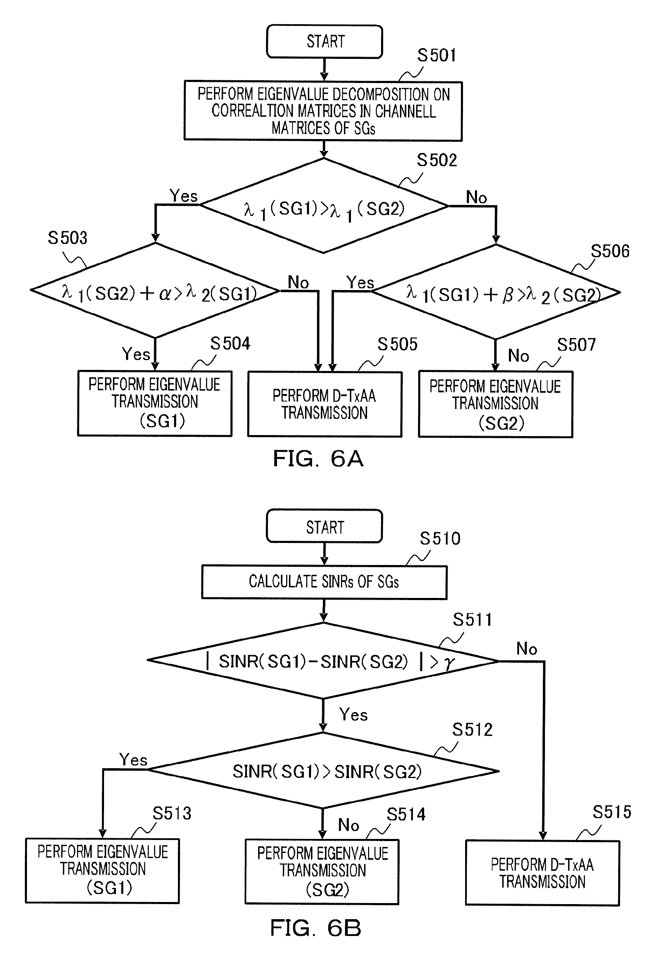

Next, a transmission mode selection flow in MIMO transmission mode determining section 207 will be described with reference to FIG.6A. A flow will be described with this embodiment where selection is carried out using eigenvalue of each subgroup as references.

In the flow of selecting MIMO transmission mode using the eigenvalue shown in FIG.6A as a reference, the correlation matrices of the channel matrices of the SGs are subjected to eigen decomposition and $\lambda 1$ (SG1) which is the first eigenvalue of SG1 and $\lambda 1$ (SG2) which is the first eigenvalue of SG2 are calculated (step S501). Next, $\lambda 1$ (SG1) and $\lambda 1$ (SG2) are compared to decide whether the relationship of $\lambda 1$ (SG1) > $\lambda 1$ (SG2) is satisfied (step S502).

In step S502, when the relationship of $\lambda 1$ (SG1) > $\lambda 1$ (SG2) holds, $\lambda 2$ (SG1), which is the second eigenvalue of SG1, and $\lambda 1$ (SG2), which is the first eigenvalue of SG2, are compared to decide whether the relationship of $\lambda 1$ (SG2) + $\alpha$ > $\lambda 2$ (SG1) is satisfied. Here, $\alpha$ is a parameter for adjusting the frequency of transmission mode selection and is a predetermined value determined according to the channel condition. Basically, when $\alpha$ is increased, D-TxAA mode transmission is more likely to be selected, and, when $\alpha$ is decreased, eigen-mode transmission is more likely to be selected (step S503). And, when the relationship of $\lambda 1$ (SG2) + $\alpha$ > $\lambda 2$ (SG1) holds, the eigen-mode transmission using SG1 is selected (step S504). On the other hand, in step S503, when the relationship of $\lambda 1$ (SG2) + $\alpha$ > $\lambda 2$ (SG1) does not hold, D-TxAA mode transmission is selected (step S505).

On the other hand, in step S502, when the relationship of $\lambda 1$ (SG1) > $\lambda 1$ (SG2) does not hold, $\lambda 1$ (SG1), which is the first eigenvalue of SG1, and $\lambda 2$, which is the second eigenvalue of SG2, are further compared to decide whether the relationship of $\lambda 1$ (SG1) + $\beta$ > $\lambda 2$ (SG2) is satisfied. Here, $\beta$ is a parameter for adjusting the frequency of transmission mode selection and is a predetermined value determined according to the channel condition. Basically, when $\beta$ is increased, D-TxAA mode transmission is more likely to be selected, and, when $\beta$ is decreased, eigen-mode transmission is more likely to be selected (step S506). Then, when the relationship of $\lambda 1$ (SG1) + $\beta$ > $\lambda 2$ (SG2) holds, D-TxAA mode transmission is selected (step S505), and, when the relationship of $\lambda 1$ (SG1) + $\beta$ > $\lambda 2$ (SG2) does not hold, eigen-mode transmission using SG2 is selected (step S507).

Further, although a case has been described with this embodiment where the selection flow using as a reference the eigenvalue of each subgroup, the flow of selecting the MIMO transmission mode using the SINR as a reference may be possible.

FIG.6B is a flow of selecting a MIMO transmission mode using the SINR as a reference. In the flow of selecting a MIMO transmission mode using the SINR as a reference, the SINR of each SG, that is, the SINR (SG1), which is the SINR of SG1, and the SINR (SG2), which is the SINR of SG2, are calculated (step S510). Next, it is decided whether the calculated SINR satisfies the relationship of |SINR (SG1) - SINR (SG2) | > γ (here, "| |" indicates the absolute value) (step S511). Here, γ is a parameter for adjusting the frequency of transmission mode selection and is a predetermined value determined according to the channel condition. When γ is increased, D-TxAA mode transmission is more likely to be selected, and, when γ is decreased, eigen-mode transmission is more likely to be selected.

When the relationship of | SINR (SG1) - SINR (SG2) | > γ is satisfied, it is further decided whether the relationship of SINR (SG1) > SINR (SG2) is satisfied (step S512). At this time, when the relationship of SINR (SG1) > SINR (SG2) is satisfied, eigen-mode transmission using SG1 is selected (step S513). On the other hand, in step S512, when the relationship of SINR (SG1) > SINR (SG2) is not satisfied, eigen-mode transmission using SG2 is selected (step S514).

On the other hand, in step S511, when the relationship of |SINR (SG1) - SINR (SG2)| > γ is not satisfied, D-TxAA mode transmission is selected (step S515).

The transmission mode selection flow in radio transmitting apparatus 10 has been described.

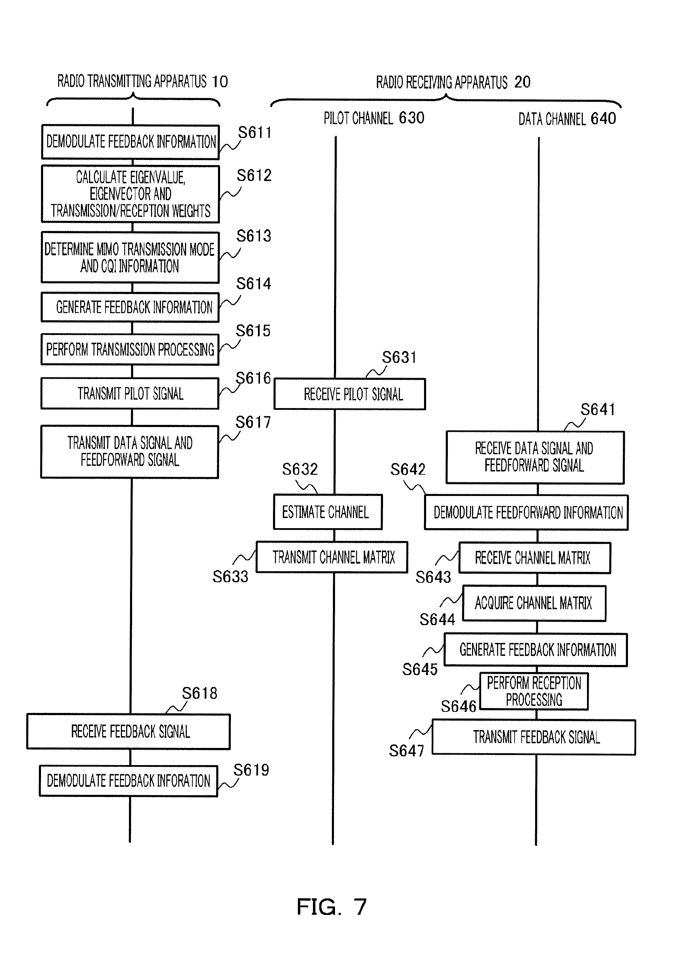

Next, controlling steps between radio transmitting apparatus 10 and radio receiving apparatus 20 will be described. FIG.7 is a sequence diagram showing controlling steps between radio transmitting apparatus 10 and radio receiving apparatus 20. Radio receiving apparatus 20 has pilot channel 630 and data channel 640. Here, the controlling steps between radio transmitting apparatus 10, pilot channel 630 and data channel 640 are shown.

It is assumed that, upon starting, a feedback signal including channel matrix information is sent out from data channel 640 of radio receiving apparatus 20 to radio transmitting apparatus 10, and, in FIG.7, the regular state will be described.

Radio transmitting apparatus 10 receives the feedback signal, demodulates the channel matrix from the feedback signal (sequence S611), performs eigenvalue decomposition on the correlation matrix of the channel matrix and calculates the eigenvalue, eigenvector and transmission and reception weights (sequence S612). Next, the MIMO transmission mode and CQI are determined based on the calculated eigenvalue (sequence S613). Further, feedback information, MIMO transmission mode information, transmission and reception weight information and CQI information are generated (sequence S614), and transmission processing including error correction coding, mapping, MIMO multiplexing and addition of a pilot signal is carried out (sequence S615).

After the transmission processing is carried out, radio transmitting apparatus 10 sends out the pilot signal to pilot channel 630 (sequence S616) and sends out a data signal and feedforward signal to data channel 640 (sequence S617) . Then, a feedback signal is received from data channel 640 (sequence S618) and the channel matrix is demodulated from feedback information (sequence S619) . Then, in radio transmitting apparatus 10, sequence S611 and sequence S619 are repeated until communication ends.

In pilot channel 630 of radio receiving apparatus 20, the pilot signal transmitted from radio transmitting apparatus 10 is received (sequence S631), channel estimation is carried out per receiving antenna based on the received pilot signal (sequence S632) and the estimated channel matrix information is sent out to data channel 640 (sequence S633). Then, in pilot channel 630, sequence S631 to sequence S633 are repeated until communication ends.

In data channel 640 of radio receiving apparatus 20, the feedforward signal and the data signal transmitted from radio transmitting apparatus 10 are received (sequence S641), and MIMO transmission mode information is demodulated from the feedforward information (sequence S642) . Then, in data channel 640, channel matrix information sent out from pilot channel 630 is received (sequence S643), the channel matrix is acquired (sequence S644), feedback information and the channel matrix are further generated (sequence S645) and then reception processing including MIMO demodulation, despreading, demapping and error correction decoding is carried out (sequence S646). Then, in data channel 640, feedback information including channel matrix information of the newly estimated channel is sent out to radio transmitting apparatus 10 (sequence S647). Then, in data channel 640, sequence S641 to sequence S647 are repeated until communication ends.

The controlling steps between radio transmitting apparatus 10 and radio receiving apparatus 20 have been described above.

According to the above configuration, transmission mode switching section 102 switches D-TxAA mode transmission mode to first or second eigen-mode transmission or switches first or second eigen-mode transmission to D-TxAA mode transmission, so that it is possible to change a MIMO channel beam of poor detection performance to a MIMO channel beam of good detection performance, sends out the MIMO channel beam and improve received quality in radio receiving apparatus 20.

That is, a configuration is provided where FB information transmitting section 193 on the radio receiving apparatus 20 side sends out a channel matrix as feedback information 197 to FB information receiving section 191 on the radio transmitting section 10 side, FB information receiving section 191 acquires the channel matrix from feedback information 197 and generates transmission weight information 1895 and MIMO transmission mode determining section 207 sends out transmission mode switching signal 195 to transmission mode switching section 102 according to the predetermined transmission mode selection flow, so that, in D-xAA transmission, for example, when the received quality of stream 1866 transmitted through transmission path 1832 becomes poor compared to stream 1865 transmitted through transmission path 1831, transmission mode switching section 102 receives transmission mode switching signal 195 outputted from FB information receiving section 191, switches inputted second stream 1866 such that eigen-mode transmission is achieved, and outputs switched second stream 1866 to spreading section 109.

In this way, while first stream 1865 is transmitted to the radio receiving apparatus 20 side through transmission path 1831 using the first eigen beam of SG1 from transmitting antennas 1801 and 1802, it is possible to transmit second stream 1866 to the radio receiving apparatus 20 side through transmission path 21, which is substantially the same as transmission path 1831 and which is different from transmission path 1832, using the second eigen beam of SG1 from same transmitting antennas 1801 and 1802.

(Embodiment 2)

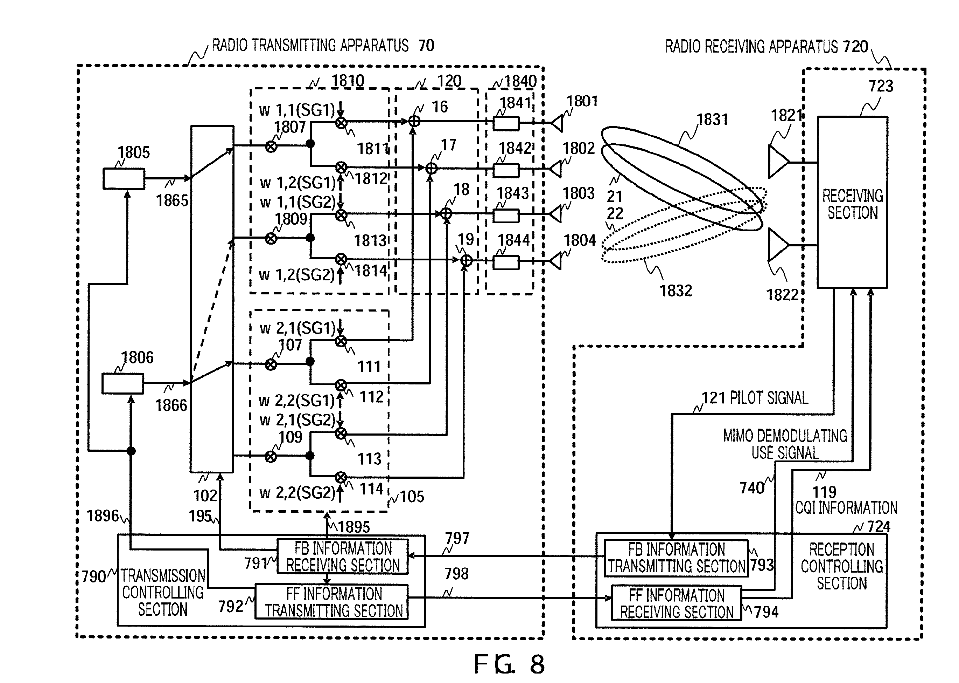

FIG.8 is a block diagram showing configurations of radio transmitting apparatus 70 and radio receiving apparatus 720 in a MIMO system according to Embodiment 2 of the present invention. In Embodiment 1, receiving section 24 feeds back feedback information 197 comprising channel matrix information, and transmission controlling section 190 determines transmission mode switching signal 195, transmission weight information 1895 and CQI information 1896, based on this feedback information 197. In contrast with this, in Embodiment 2, reception controlling section 724 determines transmission mode switching signal 195, transmission weight information 1895 and CQI information 1896 and feeds back feedback information 797 including these information, to transmission controlling section 790. Configurations and operations of transmission controlling section 790, receiving section 723 and reception controlling section 724 that are different from Embodiment 1 will be described.

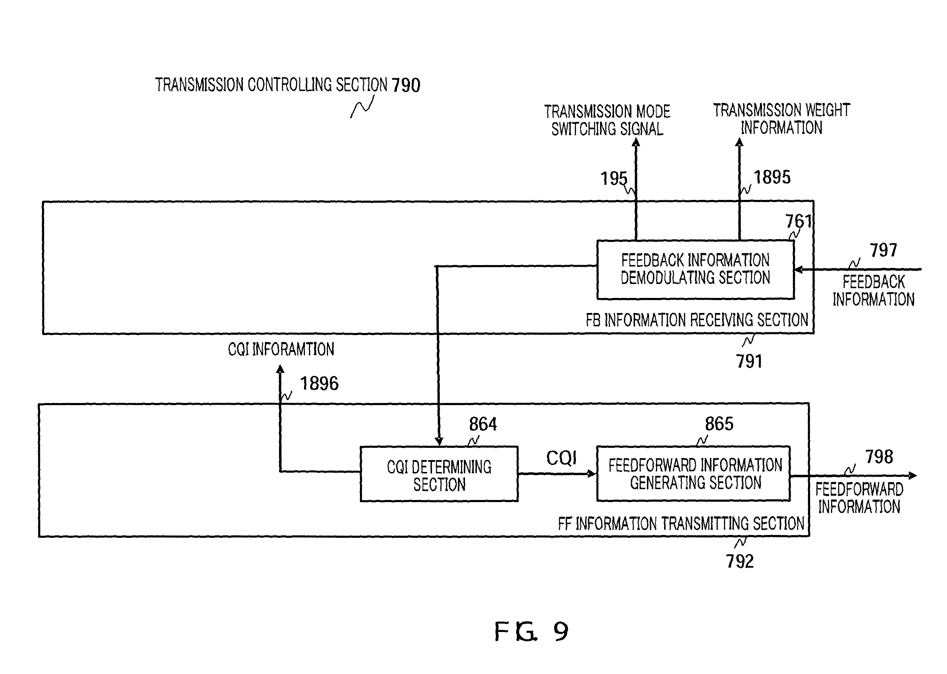

FIG.9 shows a detailed configuration of transmission controlling section 790. Transmission controlling section 790 has FB information receiving section 791 and FF information transmitting section 792. FB information receiving section 791 has feedback information demodulating section 761 receiving feedback information 797 from reception controlling section 724, demodulating a signal including transmission switching signal 195, transmission weight information 1895 and CQI information 1896 and outputting the result. Compared to FB information receiving section 191 of Embodiment 1, FB information receiving section 791 employs a configuration which does not include channel matrix acquiring section 262 acquiring a channel matrix, transmission and reception weight calculating section 263 calculating transmission and reception weights based on the acquired channel matrix and MIMO transmission mode determining section 207.

FF information transmitting section 792 has CQI determining section 864 extracting and outputting CQI information 1896 from the signal including CQI information 1896 outputted from feedback information demodulating section 761 and feedforward information generating section 865 sending out feedforward information 798 which includes CQI information, to reception controlling section 724.

Compared to FB information transmitting section 192 of Embodiment 1, instead of determining CQI information 1896 based on reception weight information outputted from transmission weight calculating section 263, FF information transmitting section 792 employs a configuration including CQI determining section 864 which extracts and outputs CQI information 1896 from the signal including CQI information 1896 outputted from feedback information demodulating section 761 and feedforward information generating section 865 which sends out feedforward information 798 including only CQI information.

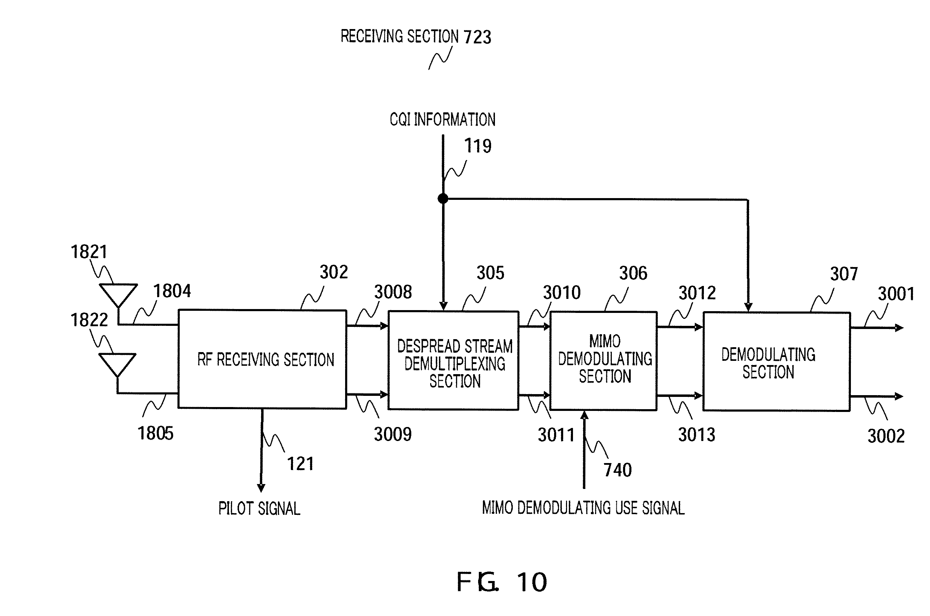

FIG.10 shows a detailed configuration of receiving section 723. Receiving section 723 is connected with receiving antennas 1821 and 1822 and employs a configuration including RF receiving section 302, despread stream demultiplexing section 305, MIMO demodulating section 306 and demodulating section 307 and is the same as in receiving section 23 of Embodiment 1 in down-converting RF signals 1804 and 1805 received at antennas 1821 and 1822, respectively, extracting and sending out pilot signal 121 in the frame by the pilot signal extracting section (not shown) and sending out to despread stream demultiplexing section 305 a signal from which pilot signal 121 is removed.

However, despread stream demultiplexing section 305 outputs to MIMO demodulating section 306 despread signals 3010 and 3011 obtained at despread stream section 305 and demodulating section 307 by multiplying by spreading code and scrambling code the signal from which pilot signal 121 outputted from RF receiving section 302 is removed, based on CQI information 119 sent out from FF information section 794. Further, MIMO demodulating section 306 performs stream demodulation on despread signals 3010 and 3011 outputted from despread stream demultiplexing section 305, based on MIMO demodulating use signal 740 from FB information transmitting section 793 and outputs stream demodulated signals 3012 and 3013 to demodulating section 307. Furthermore, demodulating section 307 performs demapping at the data mapping section (not shown) on stream demodulated signals 3012 and 3013 outputted from MIMO demodulating section 306, based on CQI information 119 from FF information receiving section 794. In this way, receiving section 723 differs from receiving section 23 in the above operations.

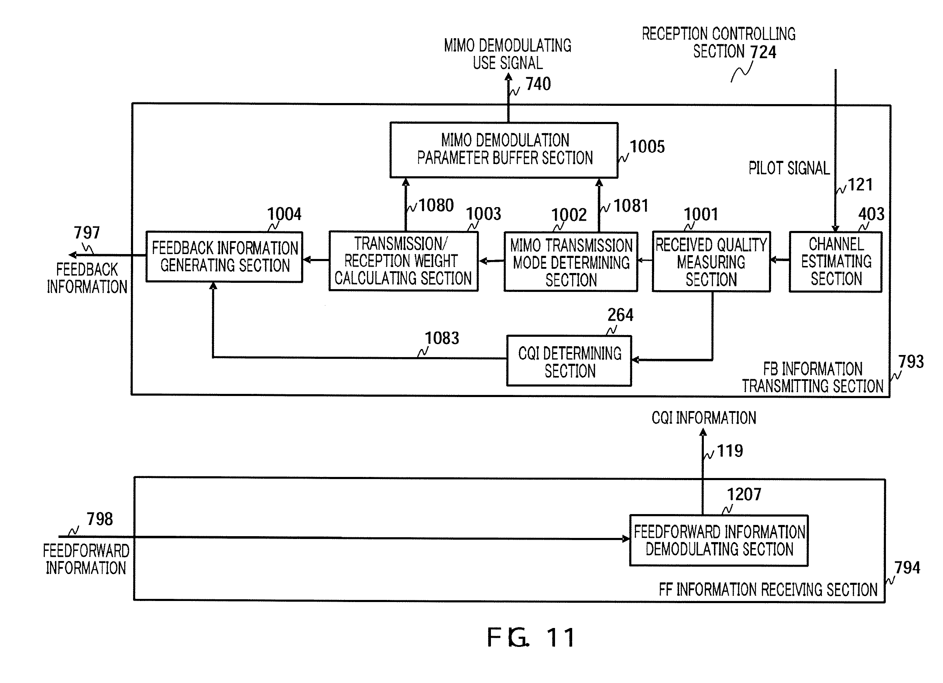

FIG.11 shows a detailed configuration of reception controlling section 724. Reception controlling section 724 has FB information transmitting section 793 and FF information receiving section 794. In addition to channel estimating section 403 estimating channel matrix information based on pilot signal 121 outputted from RF receiving section 302, FB information transmitting section 793 has received quality measuring section 1001, MIMO transmission mode determining section 1002, transmission and reception weight calculating section 1003, feedback information generating section 1004, MIMO demodulation parameter buffer section 1005 and CQI determining section 264.

Received quality measuring section 1001 calculates the channel correlation matrix from channel matrix information outputted from channel estimating section 403, further performs eigenvalue decomposition on the channel matrix, calculates an eigenvalue and eigenvector and outputs the results to MIMO transmission mode determining section 1002 and CQI determining section 264. Further, received quality measuring section 1001 carries out received SINR estimation.

According to the MIMO transmission mode selection flow described in Embodiment 1, MIMO transmission mode determining section 1002 selects the MIMO transmission mode and outputs selected MIMO transmission mode information 1081 to MIMO demodulation parameter buffer section 1005. Further, MIMO transmission mode determining section 1002 outputs eigenvalue and eigenvector information from received quality measuring section 1001 and MIMO transmission mode information 1081 to transmission and reception weight calculating section 1003.

Transmission and reception weight calculating section 1003 calculates transmission and reception weights based on eigenvalue and eigenvector information and outputs reception weight information 1080 to MIMO demodulation parameter buffer section 1005. Further, transmission and reception weight calculating section 1003 outputs transmission weight information and MIMO transmission mode information to feedback information generating section 1004.

CQI determining section 264 determines CQI information 1083 based on eigenvalue information or received SINR information and outputs the result to feedback information generating section 1004.

Feedback information generating section 1004 generates feedback information 797 including the received MIMO transmission mode information, transmission weight information and CQI information and sends out the result to FB information receiving section 791.

MIMO demodulation parameter buffer section 1005 outputs to MIMO demodulating section 305 MIMO demodulating use signal 740 including MIMO transmission mode information 1081 and transmission weight information 1080 and keeps buffering used MIMO transmission mode information 1081 and transmission weight information 1080, until new MIMO transmission mode information 1081 and transmission weight information 1080 are inputted.

FF information receiving section 794 extracts CQI information 119 from feedforward information 798 transmitted from FF information transmitting section 792 and sends out the result.

The configurations and operations of radio transmitting apparatus 70 and radio receiving apparatus 720 have been described.

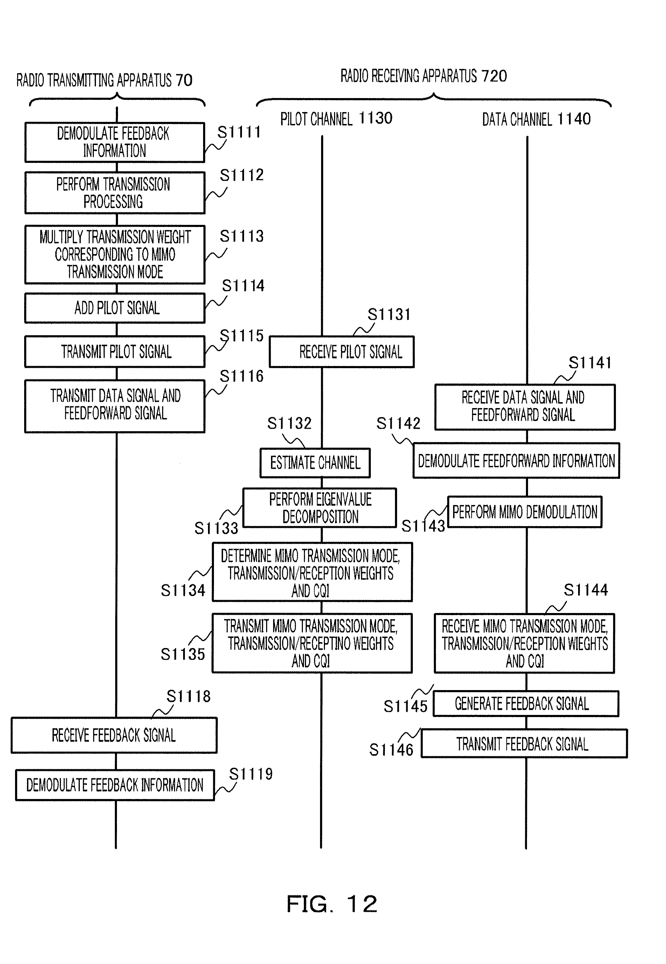

Next, controlling steps between radio transmitting apparatus 70 and radio receiving apparatus 720 will be described. FIG.12 is a sequence diagram showing the controlling steps between radio transmitting apparatus 70 and radio receiving apparatus 720. Radio receiving apparatus 720 has pilot channel 1130 and data channel 1140. Here, the controlling steps between radio transmitting apparatus 70, pilot channel 1130 and data channel 1140 are shown.

It is assumed that, upon starting, feedback information including the MIMO transmission mode information, transmission weight information and CQI information are sent out from data channel 1140 of radio receiving apparatus 720 to radio transmitting apparatus 70 and, in FIG.12, the regular state is described.

Radio transmitting apparatus 70 demodulates the MIMO transmission mode information, transmission weight information and CQI information from the received feedback information (sequence S1111), performs on the demodulation result transmission processing including, for example, error correction coding, interleaving, data mapping and spreading (sequence S1112) and then multiplies the result by the transmission weight corresponding to the MIMO transmission mode. Upon eigen-mode transmission, radio transmitting apparatus 70 carries out stream multiplexing (sequence S1113). Then, radio transmitting apparatus 70 adds a pilot signal (sequence S1114) and transmits the pilot signal to pilot channel 1130 (sequence S1115). Then, radio transmitting apparatus 70 sends out a feedforward signal including a data signal and CQI information to data channel 1140 (sequence S1116).

Then, radio transmitting apparatus 70 receives the feedback signal transmitted from data channel 1140 (sequence S1118) and demodulates the MIMO transmission mode information, CQI information and transmission weight information (sequence S1119). Then, in radio transmitting apparatus 70, sequence S1111 to sequence S1119 are repeated until communication ends.

In pilot channel 1130 of radio receiving section 720, the pilot signal transmitted from radio transmitting apparatus 70 is received (sequence S1131), channel estimation is carried out from the obtained pilot signal and the channel matrix is calculated (sequence S1132) . Next, in pilot channel 1130, the channel correlation matrix is calculated from obtained channel matrix information, the channel correlation matrix is subjected to eigenvalue decomposition and eigenvalue and eigenvector information are calculated. Here, received SINR measurement may be carried out (sequence S1133). Then, in pilot channel 1130, the transmission mode, transmission weight and CQI are determined using the eigenvalue and eigenvector information (sequence S1134), and the transmission mode information, transmission weight information and CQI information are sent out to data channel 1140 (sequence S1135). Then, in pilot channel 1130, sequence S1131 to sequence S1135 are repeated until communication ends.

In data channel 1140 of radio receiving apparatus 720, the data signal and feedforward signal transmitted from radio transmitting apparatus 70 are received (sequence S1141) and the CQI information is demodulated from the feedforward information (sequence S1142). Then, in data channel 1140, MIMO demodulation, despreading processing, demapping processing and error correction decoding are carried out using the CQI information, and a received signal is demodulated (sequence S1143). Then, in data channel 1140, the MIMO transmission mode information, transmission weight information and CQI information sent out through pilot channel 1130 are received (sequence S1144), a new feedback signal including these information is generated (sequence S1145) and these information are outputted to radio transmitting apparatus 70 (sequence S1146). Then, in data channel 1140, sequence S1141 to sequence S1146 are repeated until communication ends.

The controlling steps between radio transmitting apparatus 70 and radio receiving apparatus 720 have been described.

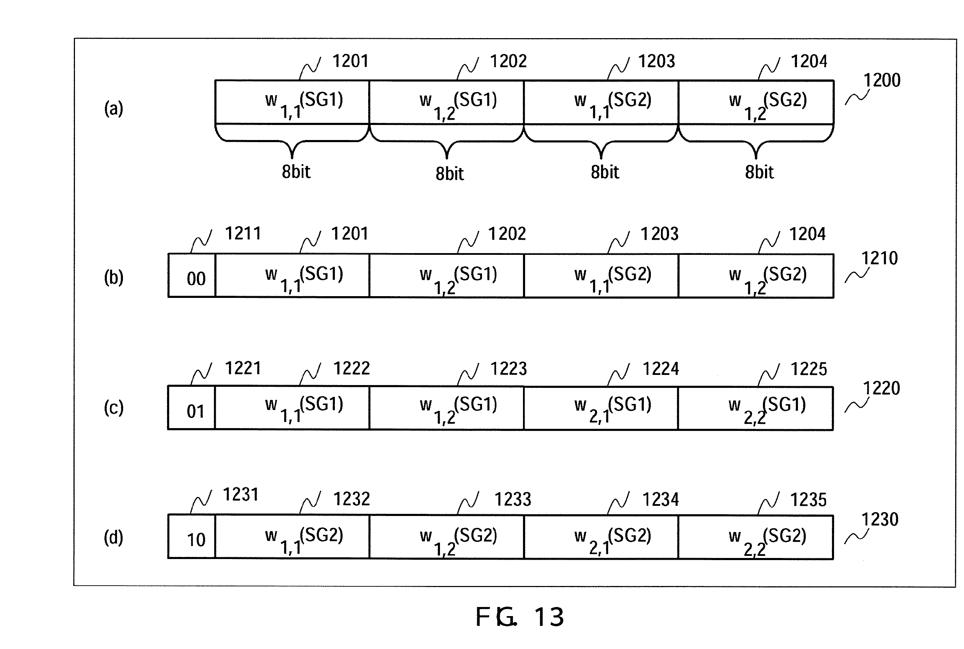

Next, the feedback format used for feedback signals will be described with reference to FIG.13. Hereinafter, for ease of explanation, the number of quantized bits of a transmission weight is eight bits in total, including three amplitude bits and five phase bits.

FIG.13(a) shows a conventional feedback format and FIGS 13 (b) to (d) further shows the feedback formats of the present invention for three types of transmission modes.

Feedback format 1200 of the conventional system of FIG.13 (a) employs a configuration including information section 1201 which includes information of transmission weight W1,1 (SG1) by which stream 1865 radiated from transmitting antenna 1801 of SG1 is multiplied, information section 1202 which includes information of transmission weight W1,2 (SG1) by which stream 1865 radiated from transmitting antenna 1802 of SG1 is multiplied, information section 1203 which includes information of transmission weight W1,1 (SG2) by which stream 1866 radiated from transmitting antenna 1803 of SG2 is multiplied and information section 1204 which includes information of transmission weight W1,2 (SG2) by which stream 1866 radiated from transmitting antenna 1804 of SG2 is multiplied, quantizes each weight information at eight bits and feeds back information formed with thirty-two bits in total to the radio transmitting apparatus 70 side.

FIG. 13 (b) shows the feedback format of the present invention, which is feedback format 1210 used in D-TxAA mode transmission. Feedback format 1210 employs a configuration that adds two-bit indicator section 1211 for specifying D-TxAA mode transmission to feedback format 1200 in the conventional system.

FIG. 13 (c) shows the feedback format of the present invention, which is feedback format 1220 used in eigen-mode transmission using SG1. Feedback format 1220 employs a configuration including two-bit indicator section 1221 for specifying the eigen-mode transmission, information section 1222 which includes information of transmission weight W1,1 (SG1) by which stream 1865 radiated form transmitting antenna 1801 of SG1 is multiplied, information section 1223 which includes information of transmission weight W1,2 (SG1) by which stream 1865 radiated from transmitting antenna 1802 of SG1 is multiplied, information section 1224 which includes information of transmission weight W2,1 (SG1) by which stream 1866 radiated from transmitting antenna 1803 of SG2 is multiplied and information section 1225 which includes information of transmission weight W2,2 (SG2) by which stream 1866 radiated from transmitting antenna 1804 of SG2 is multiplied.

FIG.13 (d) shows the feedback format of the present invention, which is feedback format 1230 used in the eigen-modetransmission using SG2. Feedback format 1230 employs a configuration including two-bit indicator section 1231 for specifying the eigen-mode transmission, information section 1232 which includes information of transmission weight W1,1 (SG2) by which stream 1865 radiated from transmitting antenna 1803 of SG2 is multiplied, information section 1233 which includes information of transmission weight W1,2 (SG2) by which stream 1865 radiated from transmitting antenna 1804 of SG2 is multiplied, information section 1234 which includes information of transmission weight W2,1 (SG2) by which stream 1866 radiated from transmitting antenna 1804 of SG2 is multiplied and information section 1235 which includes information of transmission weight W2,2 (SG2) by which stream 1866 radiated from transmitting antenna 1804 of SG2 is multiplied.

In feedback formats (b) to (d) of the present invention, by quantizing each weight information at eight bits, only the feedback format of total thirty-four bits information obtained by increasing only two bits may be fed back to the radio transmitting apparatus 70 side, so that overall feedback information capacity does not substantially change compared to the case of the conventional feedback format.

In this way, according to Embodiment 2, FB information transmitting section 793 on the radio receiving apparatus 720 side determines MIMO transmission mode information, transmission weight information, reception weight information and CQI information based on the channel matrix outputted from channel estimating section 403 and feeds back feedback information 797 including these information to FB information receiving section 791 of radio transmitting section 70, so that feedback information capacity becomes less than the case of transmitting channel matrix information. As a result, even if information loss occurs in the middle of transmission of feedback information, feedback information capacity is few and feedback information is transmitted in a short time, so that it is possible to reduce the frequency of an error in acquiring transmission feedback information, reduce the number of retransmissions in radio transmitting apparatus 70 and further improve received quality.

(Embodiment 3)

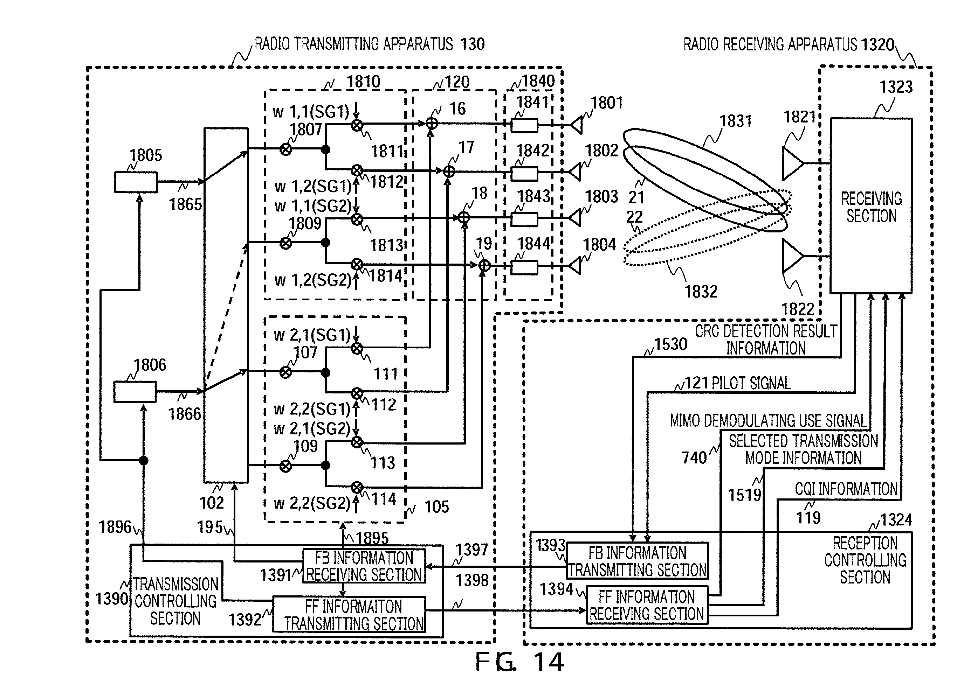

FIG.14 is a block diagram showing configurations of radio transmitting apparatus 130 and radio receiving apparatus 1320 in a MIMO system according to Embodiment 3 of the present invention. Although in Embodiment 2, transmission mode switching upon retransmission is not taken into consideration, mapping table referring sections for retransmission streams are provided in FF information receiving section 1394 and FB information receiving section 1391 and transmission mode switching upon retransmission is carried out according to predetermined steps in Embodiment 3. Here, different configurations and operations of transmission controlling section 1390, receiving section 1323 and reception controlling section 1324 from Embodiment 2 will be described.

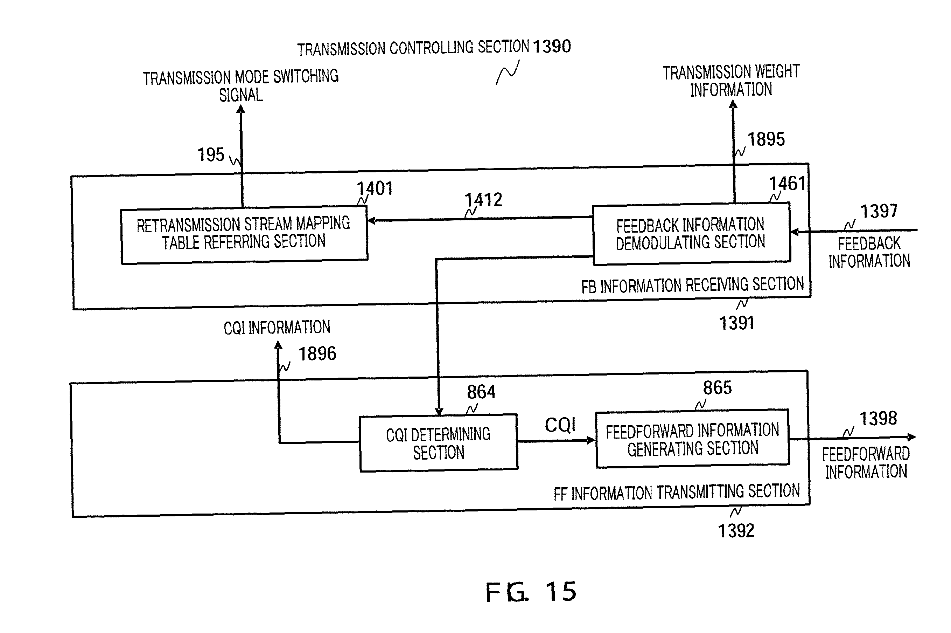

FIG.15 shows a detailed configuration of transmission controlling section 1390. Transmission controlling section 1390 has FB information receiving section 1391 and FF information transmitting section 1392. FB information receiving section 1391 has feedback information demodulating section 1461 receiving feedback information 1397 from FB information transmitting section 1393, demodulating a signal including transmission weight information, the number of retransmissions and ACK/NACK information and CQI information and outputting the result, and retransmission stream mapping table referring section 1401 receiving the number of retransmissions and ACK/NACK information and sending out transmission mode switching signal 195 according to the predetermined steps.

FF information transmitting section 1392 has the same configuration as FF information transmitting section 792 in Embodiment 2. That is, feedback information demodulating section 1461 differs from transmission controlling section 790 of Embodiment 2 in further demodulating the number of retransmissions and ACK/NACK information and outputting the demodulating result to retransmission stream mapping table referring section 1401.

Retransmission mapping table referring section 1401 receives the number of retransmissions and ACK/NACK information 1412 and selects a transmission mode with reference to a retransmission rearrangement table described later. At this time, when the eigen-mode transmission is selected, the CQI of each stream is derived based on the first and second eigenvalue in each subgroup and selects the subgroup having the higher overall data rate.

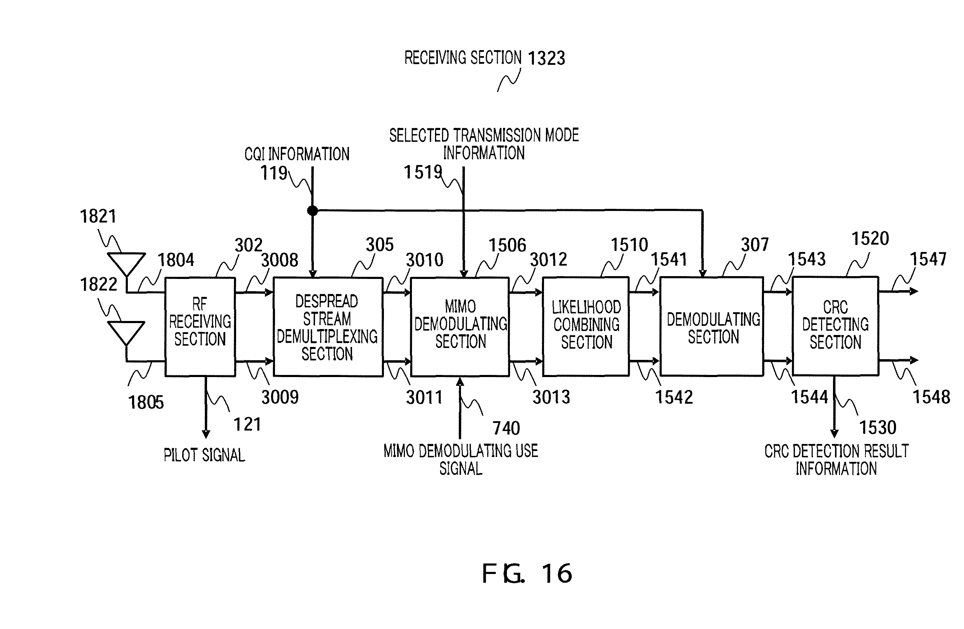

FIG.16 shows a detailed configuration of receiving section 1323. Compared to receiving section 723 of Embodiment 2, instead of MIMO demodulating section 306 which performs stream demodulation on despread signals 3010 and 3011 outputted from despread stream demultiplexing section 305 based on MIMO demodulating use signal 740 from FB information transmitting section 793, receiving section 1323 has MIMO demodulating section 1506 which performs stream demodulation on despread signals 3010 and 3011 outputted from despread stream demultiplexing section 305 based on MIMO demodulating use signal 740 from FF information transmitting section 1393 and selected transmission mode information 1519 outputted from FF information receiving section 1391. Further, in receiving section 1323, likelihood combining section 1510 added to a subsequent stage of this MIMO demodulating section 1506, is connected with demodulating section 307, and CRC detecting section 1520 is provided to a subsequent stage of demodulating section 307.

Likelihood combining section 1510 calculates likelihoods of retransmission streams of outputs 3012 and 3013 of MIMO demodulating section 1506, performs likelihood combining on the calculation result with the NACK decision stream stored inside and outputs likelihood combined signals 1541 and 1542 to demodulating section 307.

CRC detecting section 1520 receives demodulating section outputs 1543 and 1544, checks whether there is an error in the decoded sequences, sends out CRC detection result information 1530 to reception controlling section 1324 and outputs streams 1547 and 1548 after CRC detection.

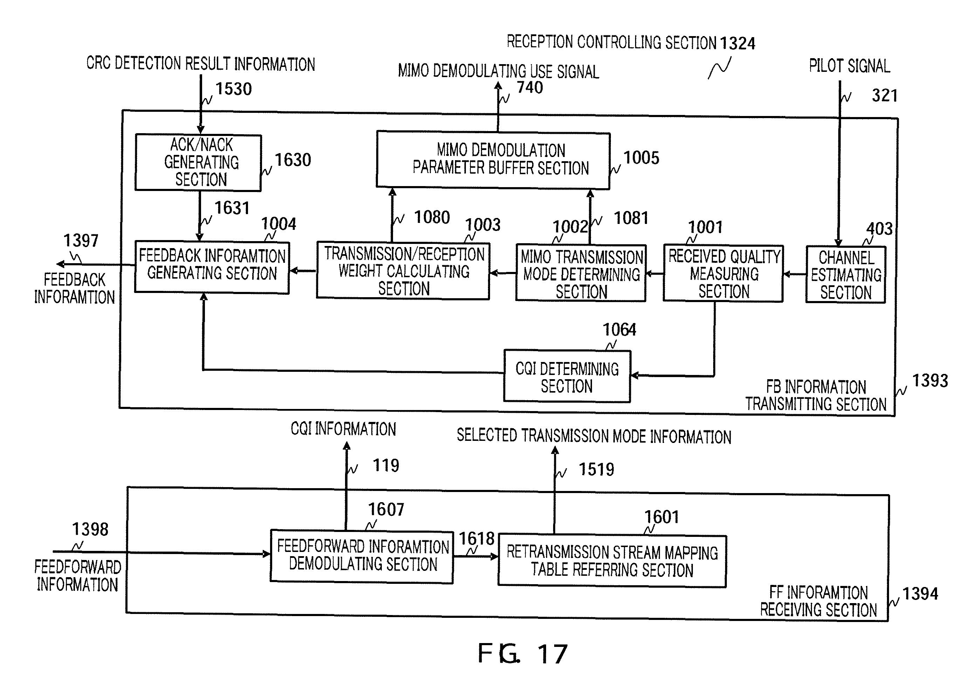

FIG.17 is a detailed configuration of reception controlling section 1324. Receptioncontrollingsection 1324 has FB information transmitting section 1393 and FF information receiving section 1394. Compared to reception controlling section 724 of Embodiment 2, ACK/NACK generating section 1630 in FB information transmitting section 1393 is added to reception controlling section 1324. Instead of feedback information generating section 1004 which generates feedback information 797 including transmission weight information, MIMO transmission mode information and CQI information, feedback information generating section 1004 which generates feedback information 1397 including the number of retransmissions and ACK/NACK information in addition to a conventional signal, is used. Retransmission stream mapping table referring section 1601 is added in FF information receiving section 1394. Instead of feedforward information demodulating section 1207 which generates CQI information 119 from feedforward information 798, feedforward information demodulating section 1607 which outputs the number of retransmissions and ACK/NACK added to CQI information 119 from feedback information 1398 including the number of retransmissions and ACK/NACK information in addition to a conventional signal, is used.

ACK/NACK generating section 1630 generates the number of retransmissions and ACK/NACK information 1631 based on CRC detection result information 1530, and outputs the result to feedback information generating section 1004.

Feedback information generating section 1004 sends out feedback information 1397 including the transmission weight information, CQI information and number of retransmissions and ACK/NACK information.

Feedforward information demodulating section 1607 outputs the number of retransmissions and ACK/NACK information in addition to CQI information 119 from feedforward information 1398 transmitted from FF information transmitting section 1392, to retransmission stream mapping table referring section 1601.

Retransmission stream mapping table referring section 1601 selects a transmission mode by referring to a retransmission rearrangement table described later based on number of retransmissions and ACK /NACK information 1618 outputted from feedforward information demodulating section 1607 and outputs selected transmission mode information 1519 to MIMO demodulating section 1506.

The configurations and operations of radio transmitting apparatus 130 and radio receiving apparatus 1320 in the MIMO system according to Embodiment 3 of the present invention have been described.

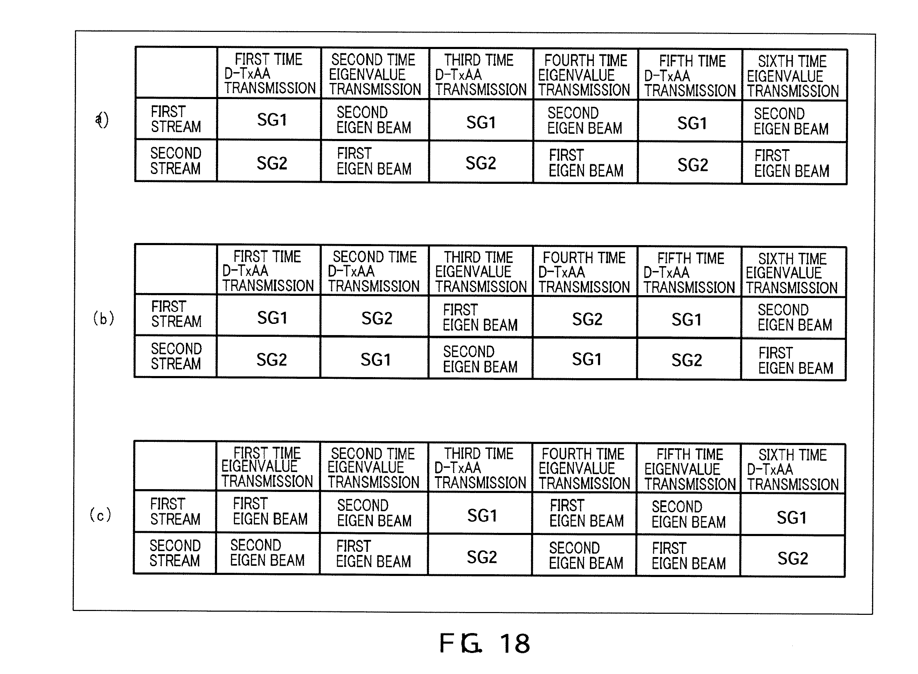

Next, a retransmission method using a retransmission rearrangement table will be described with reference to FIG.18(a). In this embodiment, the retransmission method using a retransmission rearrangement table for carrying out uniform allocation will be described.

The table of FIG.18 (a) shows transmission modes of the first stream and the second stream upon the first transmission to the sixth transmission when the received quality of SG2 is poorer than the received quality of SG1.

There are four types of transmission modes including: the first transmission mode which carries out D-Tx-AAmode transmission using SG1, that is, transmitting antennas 1801 and 1802; the second transmission mode which carries out D-TxAA mode transmission using SG2, that is, transmitting antennas 1803 and 1804; the third transmission mode which carries out eigen-mode transmission using the second eigenvalue using SG1; and the fourth transmission mode which carries out eigen-mode transmission using the first eigenvalue using SG1. For example, the transmission mode of the first stream upon the first transmission is "SG1", that is, the first transmission mode and the transmission mode of the second stream is "SG2", that is, the second transmission mode.

When retransmission is carried out based on the rearrangement table of FIG. 18 (a) for carrying out uniform allocation, D-TxAA mode transmission is carried out in the odd number of transmissions and eigen-mode transmission is carried out in the even number of transmissions, so that the received quality will be uniform between the first stream and the second stream. That is, the stream is mapped such that, in the odd number of transmissions, the received quality of the first stream improves and, in the even number of transmissions, the received quality of the second stream improves.

Further, when the received quality of SG1 is poorer than the received quality of SG2, a table (not shown) is used in the table of FIG,18(a) where "SG1" is rewritten to "SG2" and the "first eigen beam" is rewritten to the "second eigen beam." Although the correspondences become contrary to FIG. 18 (a) and, in this case, the streams are mapped such that the received quality of the second stream in the odd number of transmissions and the received quality of the first stream in the even number of transmissions improve, the received quality of the first stream and the received quality of the second stream become uniform similar to FIG.18(a) as a result.

Here, although a case has been described with this embodiment where the retransmission method of using the retransmission rearrangement table for carrying out uniform allocation is used, a retransmission method of using an rearrangement table for preferentially allocating D-TxAA mode transmission or a retransmission method of using an rearrangement table for preferentially allocating eigen-mode transmission may be used.

FIG.18(b) shows an rearrangement table for preferentially allocating D-TxAA mode transmission. This table shows the transmission modes of the first stream and the second stream upon the first transmission to the sixth transmission when the received quality of SG2 is poorer than the received quality of SG1. There are four types of transmission modes including: the first transmission mode which carries out D-TxAA mode transmission using SG1; the second transmission mode which carries out D-TxAA mode transmission using SG2; the third transmission mode which carries out eigen-mode transmission using the second eigenvalue using SG1; and the fourth transmission mode which carries out eigen-mode transmission using the first eigenvalue using SG1. For example, the first stream transmission mode upon the third transmission becomes the "the first eigen beam," that is, the fourth transmission mode, and the second stream transmission mode becomes the "second eigen beam," that is, the third transmission mode.

When retransmission is carried out based on the rearrangement table of FIG.18(b) for preferentially allocating D-TxAA transmission, the streams are mapped such that D-TxAA mode transmission is preferentially carried out.

Here, when the received quality of SG1 is poorer than the received quality of SG2, a table (not shown) is used in the table of FIG. 18 (b) where "SG1" is rewritten to "SG2" and the "first eigen beam" is rewritten to the "second eigen beam". Although the correspondences become contrary to the table of FIG.18(b), in this case, the streams are mapped such that D-TxAA mode transmission is preferentially carried out, similar to FIG.18(b).

FIG.18(c) shows an rearrangement table for preferentially allocating eigen-mode transmission. This table shows transmission modes of the first stream and the second stream upon the first transmission to the sixth transmission when the received quality of SG2 is poorer than the received quality of SG1. There are four types of transmission modes including: the first transmission mode which carries out D-TxAA mode transmission using SG1; the second transmission mode which carries out D-xAA mode transmission using SG2; the third transmission mode which carries out eigen-mode transmission using the second eigenvalue using SG1; and the fourth transmission mode which carries out eigen-mode transmission using the first eigenvalue using SG1. For example, the first stream transmission mode upon the second transmission becomes the "first eigen beam," that is, the fourth transmission mode, and the second stream transmission mode becomes the "second eigen beam," that is, the third transmission mode.

When retransmission is carried out based on the rearrangement table for preferentially allocating the eigen-mode transmission of FIG.18(c), the streams are mapped such that eigen-mode transmission is preferentially carried out.

Here, when the received quality of SG1 is poorer than the received quality of SG2, a table (not shown) is used in the table of FIG.18 (c) where "SG1" is rewritten to "SG2" and the "first eigen beam" is rewritten to the "second eigen beam." Although the correspondences become contrary to the table of FIG.18(c), the streams are mapped such that eigen-mode transmission is preferentially carried out.

Further, a case has been described here where the MIMO transmission mode is changed per retransmission by referring to the retransmission rearrangement table determined in advance, a method of determining the MIMO transmission mode based on the MIMO transmission mode fed back as in Embodiment 1 and Embodiment 2 may be used. In this case, the streams need to be mapped such that the received quality of stream 1 and the received quality of stream 2 become uniform. For example, when eigen-mode transmission continues twice, stream 1 is subjected to first eigen beam transmission upon the first transmission and stream 2 is subjected to first eigen beam transmission upon the second transmission. Further, when D-TxAA mode transmission continues successfully, stream 1 is subjected to TxAA transmission using SG1 upon the first transmission and is subjected to TxAA transmission using SG2 upon the second transmission or stream 1 is subjected to TxAA transmission using SG2 upon the first transmission and is subjected to TxAA transmission using SG2 upon the second transmission.

The retransmission method using the retransmission rearrangement table has been described.

In this way, according to Embodiment 3, on the radio transmitting apparatus 130 side, retransmission stream mapping table referring section 1401 is provided in FB information receiving section 1391, transmission mode switching signal 195 generated based on the retransmission rearrangement table for carrying out uniform allocation upon retransmission is sent out to transmission mode switching section 102, transmission mode switching is carried out and feedforward information 1398 including the number of retransmissions information from FF information transmitting section 1392 is sent out to FF information receiving section 1394. On the other hand, on the radio receiving apparatus 1320 side, FB information transmitting section 1393 has retransmission stream mapping table referring section 1601 and, by generating selected transmission mode information 1519 based on the number of retransmissions information transmitted as feedforward information and the retransmission rearrangement table upon MIMO demodulation in retransmission, sending out selected transmission mode information to MIMO demodulating section 1506 and MIMO re-demodulating the information, retransmission stream mapping table referring section 1601 can make received quality of first stream 1865 and second stream 1866 uniform, so that it is possible to further improve the received quality.

Also, cases have been described with the above embodiments where the present invention is configured by hardware. However, the present invention can also be realized by software.

Each function block employed in the description of each of the aforementioned embodiments may typically be implemented as an LSI constituted by an integrated circuit. These may be individual chips or partially or totally contained on a single chip. "LSI" is adopted here but this may also be referred to as "IC", system LSI", "super LSI", or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The present application is based on Japanese patent application No.2005-152094, filed on May 25, 2005, the entire content of which is expressly incorporated by reference herein.

Industrial Applicability

The radio transmitting apparatus, radio receiving apparatus and radio transmission method according to the present invention make it possible to improve performance of stream detection in D-TxAA and is suitable for a MIMO system.

**Claims**

**1.** A radio transmitting apparatus comprising:

a plurality of transmitting antennas;

a transmission mode determining section that determines one transmission mode of an eigen mode transmission using the plurality of transmitting antennas and a double transmit antenna array mode transmission, based on information fed back from a communicating party; and
a transmitting section that transmits streams by switching to the determined transmission mode.

2. The radio transmitting apparatus according to claim 1, wherein, based on channel environment information of streams comprising the fed back information, the transmission mode determining section determines the double transmit antenna array mode transmission when a quality difference between streams transmitted from subgroup antennas is less than a predetermined threshold value and determines eigen mode transmission using subgroup antennas having high quality when the quality difference is equal to or greater than the predetermined threshold value.

3. The radio transmitting apparatus according to claim 1, wherein the channel environment information comprises one of a multi-input multi-output channel matrix, a received signal to interference and noise ratio, and an eigenvalue.

4. The radio transmitting apparatus according to claim 1, wherein the transmission mode determining section determines a transmission mode according to a transmission mode comprising the fed back information.

5. The radio transmitting apparatus according to claim 4, wherein the transmission mode comprising the fed back information is one of a first eigen mode transmission using a first eigenvalue, a second eigen mode transmission using the second eigenvalue and the double transmit antenna array mode transmission, the first eigenvalue and a second eigenvalue being calculated from the multi-input multi-output channel matrix.

6. The radio transmitting apparatus according to claim 1, wherein the transmission mode determining section determines a transmission mode different from a previous transmission mode per retransmission.

7. A radio receiving apparatus comprising:

a transmission mode determining section that determines one transmission mode of an eigen mode transmission using a plurality of transmitting antennas and a double transmit antenna array mode transmission, based on a propagation environment; and
a feedback section that feeds back the determined transmission mode to a communicating party.

8. A radio transmission method comprising:

a transmission mode determining step of determining one transmission mode of an eigen mode transmission using a plurality of transmitting antennas and a double transmit antenna array mode transmission, based on information fed back from a communicating party; and
a transmitting step of transmitting streams by switching to the determined transmission mode.

FIG. 1 (PRIOR ART)

FIG. 2

EP 1 879 317 A1

TRANSMISSION MODE
SWITCHING SIGNAL

TRANSMISSION WEIGHT
INFORMATION

TRANSMISSION CONTROLLING SECTION 190

195

1895

207
MIMO TRANSMISSION
MODE DETERMINING
SECTION

263
TRANSMISSION/RECEPTION
WEIGHT CALCULATING
SECTION

262
CHANNEL MATRIX
ACQUIRING SECTION

261
FEEDBACK INFORMATION
DEMODULATING SECTION

197
FEEDBACK
INFORMATION

FB INFORMATION RECEIVING SECTION

191

CQI INFORMATION

1896

264
CQI DETERMINING
SECTION

CQI, RECEPTION WEIGHT

265
FEEDFORWARD INFORMATION
GENERATING SECTION

198
FEEDFORWARD
INFORMATION

FF INFORMATION TRANSMITTING SECTION

192

FIG. 3

EP 1 879 317 A1

EP 1 879 317 A1

RECEIVING SECTION 23

CQI INFORMATION     RECEPTION WEIGHT
INFORMATION

119               118

1821

1822   1804      302    3008    305    3010    306    3012    307    3001

| RF RECEIVING SECTION | DESPREAD STREAM DEMULTIPLEXING SECTION | MIMO DEMODULATING SECTION | DEMODULATING SECTION |

1805           3009       3011       3013       3002

121

PILOT SIGNAL

F I G. 4

RECEPTION CONTROLLING SECTION  24

PILOT SIGNAL

121

403

FEEDBACK INFORMATION ← 197 | CHANNEL ESTIMATING SECTION

FB INFORMATION TRANSMITTING SECTION  193

RECEPTION WEIGHT INFORMATION | CQI INFORMATION

118 | 119

404

FEEDFORWARD INFORMATION → 198 → FEEDFORWARD INFORMATION DEMODULATING SECTION

FF INFORMATION RECEIVING SECTION  194

F G. 5

EP 1 879 317 A1

START

S501

PERFORM EIGENVALUE DECOMPOSITION ON
CORREALTION MATRICES IN CHANNELL
MATRICES OF SGs

S502

Yes ← $\lambda_1(SG1) > \lambda_1(SG2)$ → No

S503

$\lambda_1(SG2) + \alpha > \lambda_2(SG1)$ — No

Yes — $\lambda_1(SG1) + \beta > \lambda_2(SG2)$ S506

Yes ↓ S504

PERFORM EIGENVALUE
TRANSMISSION
(SG1)

S505

PERFORM D-TxAA
TRANSMISSION

No ↓ S507

PERFORM EIGENVALUE
TRANSMISSION
(SG2)

FIG. 6A

START

S510

CALCULATE SINRs OF SGs

S511

$| SINR(SG1) - SINR(SG2) | > \gamma$ — No

Yes ↓

S512

Yes — $SINR(SG1) > SINR(SG2)$

S513

PERFORM EIGENVALUE
TRANSMISSION
(SG1)

No ↓ S514

PERFORM EIGENVALUE
TRANSMISSION
(SG2)

S515

PERFORM D-TxAA
TRANSMISSION

FIG. 6B

RADIO TRANSMITTING APPARATUS 10

RADIO RECEIVING APPARATUS 20

PILOT CHANNEL 630

DATA CHANNEL 640

| DEMODULATE FEEDBACK INFORMATION | S611 |

| CALCULATE EIGENVALUE, EIGENVECTOR AND TRANSMISSION/RECEPTION WEIGHTS | S612 |

| DETERMINE MIMO TRANSMISSION MODE AND CQI INFORMATION | S613 |

| GENERATE FEEDBACK INFORMATION | S614 |

| PERFORM TRANSMISSION PROCESSING | S615 |

| TRANSMIT PILOT SIGNAL | S616 |

S631 — RECEIVE PILOT SIGNAL

| TRANSMIT DATA SIGNAL AND FEEDFORWARD SIGNAL | S617 |

S641 — RECEIVE DATA SIGNAL AND FEEDFORWARD SIGNAL

S632 — ESTIMATE CHANNEL

S642 — DEMODULATE FEEDFORWARD INFORMATION

TRANSMIT CHANNEL MATRIX

S633

RECEIVE CHANNEL MATRIX

S643

ACQUIRE CHANNEL MATRIX

S644

GENERATE FEEDBACK INFORMATION

S645

PERFORM RECEPTION PROCESSING

S646

| RECEIVE FEEDBACK SIGNAL | S618 |

TRANSMIT FEEDBACK SIGNAL

S647

| DEMODULATE FEEDBACK INFORATION | S619 |

FIG. 7

25

RADIO TRANSMITTING APPARATUS 70

RADIO RECEIVING APPARATUS 720

F I G. 8

EP 1 879 317 A1

TRANSMISSION CONTROLLING SECTION 790

TRANSMISSION MODE
SWITCHING SIGNAL

TRANSMISSION WEIGHT
INFORMATION

195

1895

761

797

FEEDBACK INFORMATION
DEMODULATING SECTION

FEEDBACK
INFORMATION

FB INFORMATION RECEIVING SECTION

791

CQI INFORAMTION

1896

864

865

798

CQI DETERMINING
SECTION

CQI

FEEDFORWARD INFORMATION
GENERATING SECTION

FEEDFORWARD
INFORMATION

FF INFORMATION TRANSMITTING SECTION

792

FIG. 9

EP 1 879 317 A1

CQI INFORMATION

119

1821

1822

1804

302

3008

305

3010

306

3012

307

3001

RF RECEIVING SECTION

DESPREAD STREAM DEMULTIPLEXING SECTION

MIMO DEMODULATING SECTION

DEMODULATING SECTION

1805

3009

3011

740

3013

3002

121

PILOT SIGNAL

MIMO DEMODULATING USE SIGNAL

28

EP 1 879 317 A1

F I G. 10

RECEPTION CONTROLLING SECTION 724

PILOT SIGNAL 121

403 CHANNEL ESTIMATING SECTION

1001 RECEIVED QUALITY MEASURING SECTION

1081

1005 MIMO DEMODULATION PARAMETER BUFFER SECTION

1002 MIMO TRANSMISSION MODE DETERMINING SECTION

264 CQI DETERMINING SECTION

1080 1003 TRANSMISSION/RECEPTION WEIGHT CALCULATING SECTION

1083

MIMO DEMODULATING USE SIGNAL 740

1004 FEEDBACK INFORMATION GENERATING SECTION

793 FB INFORMATION TRANSMITTING SECTION

797 FEEDBACK INFORMATION

CQI INFORMATION 119

1207 FEEDFORWARD INFORMATION DEMODULATING SECTION

794 FF INFORMATION RECEIVING SECTION

798 FEEDFORWARD INFORMATION

F G. 11

RADIO TRANSMITTING APPARATUS 70                    RADIO RECEIVING APPARATUS 720

PILOT CHANNEL 1130          DATA CHANNEL 1140

| DEMODULATE FEEDBACK INFORMATION | S1111 |

| PERFORM TRANSMISSION PROCESSING | S1112 |

| MULTIPLY TRANSMISSION WEIGHT CORRESPONDING TO MIMO TRANSMISSION MODE | S1113 |

| ADD PILOT SIGNAL | S1114 |

| TRANSMIT PILOT SIGNAL | S1115 |

S1131
| RECEIVE PILOT SIGNAL |

S1141
| RECEIVE DATA SIGNAL AND FEEDFORWARD SIGNAL |

| TRANSMIT DATA SIGNAL AND FEEDFORWARD SIGNAL | S1116 |

S1132
| ESTIMATE CHANNEL |

S1142
| DEMODULATE FEEDFORWARD INFORMATION |

| PERFORM EIGENVALUE DECOMPOSITION |
S1133

| PERFORM MIMO DEMODULATION |
S1143

| DETERMINE MIMO TRANSMISSION MODE, TRANSMISSION/RECEPTION WEIGHTS AND CQI |
S1134

| TRANSMIT MIMO TRANSMISSION MODE, TRANSMISSION/RECEPTINO WEIGHTS AND CQI |
S1135

| RECEIVE MIMO TRANSMISSION MODE, TRANSMISSION/RECEPTION WIEGHTS AND CQI |
S1144

S1118
| RECEIVE FEEDBACK SIGNAL |

S1145
| GENERATE FEEDBACK SIGNAL |

S1146
| TRANSMIT FEEDBACK SIGNAL |

| DEMODULATE FEEDBACK INFORMATION | S1119 |

FIG. 12

EP 1 879 317 A1

(a)

| 1201 | 1202 | 1203 | 1204 | 1200 |
|---|---|---|---|---|
| $w_{1,1}$(SG1) | $w_{1,2}$(SG1) | $w_{1,1}$(SG2) | $w_{1,2}$(SG2) | |

8bit     8bit     8bit     8bit

(b)

| 1211 | 1201 | 1202 | 1203 | 1204 | 1210 |
|---|---|---|---|---|---|
| 00 | $w_{1,1}$(SG1) | $w_{1,2}$(SG1) | $w_{1,1}$(SG2) | $w_{1,2}$(SG2) | |

(c)

| 1221 | 1222 | 1223 | 1224 | 1225 | 1220 |
|---|---|---|---|---|---|
| 01 | $w_{1,1}$(SG1) | $w_{1,2}$(SG1) | $w_{2,1}$(SG1) | $w_{2,2}$(SG1) | |

(d)

| 1231 | 1232 | 1233 | 1234 | 1235 | 1230 |
|---|---|---|---|---|---|
| 10 | $w_{1,1}$(SG2) | $w_{1,2}$(SG2) | $w_{2,1}$(SG2) | $w_{2,2}$(SG2) | |

F I G. 13

FIG. 14

TRANSMISSION CONTROLLING SECTION 1390

TRANSMISSION MODE SWITCHING
SIGNAL

TRANSMISSION WEIGHT
INFORMATION

1895

195

1401

1412

1461

1397

| RETRANSMISSION STREAM MAPPING TABLE REFERRING SECTION | | FEEDBACK INFORMATION DEMODULATING SECTION |

FEEDBACK
INFORMATION

FB INFORMATION RECEIVING SECTION

1391

CQI INFORMATION

1896

864

865

1398

| CQI DETERMINING SECTION | CQI | FEEDFORWARD INFORMATION GENERATING SECTION |

FEEDFORWARD
INFORMATION

FF INFORMATION TRANSMITTING SECTION

1392

F G. 15

EP 1 879 317 A1

RECEIVING SECTION 1323

SELECTED TRANSMISSION MODE INFORMATION 1519

CQI INFORMATION 119

1821 · 1804

1822 · 1805

RF RECEIVING SECTION

302 · 3008

3009 · 121

PILOT SIGNAL

DESPREAD STREAM DEMULTIPLEXING SECTION 305

3010

3011

MIMO DEMODULATING USE SIGNAL 740

MIMO DEMODULATING SECTION

1506 · 3012

3013

LIKELIHOOD COMBINING SECTION 1510

1541

1542

DEMODULATING SECTION 307

1543

1544

CRC DETECTING SECTION 1520

1547

1548

CRC DETECTION RESULT INFORMATION 1530

FIG. 16

34

CRC DETECTION RESULT INFORMATION

MIMO DEMODULATING USE SIGNAL

PILOT SIGNAL

1530

740

321

| ACK/NACK GENERATING SECTION | 1630 |

MIMO DEMODULATION PARAMETER BUFFER SECTION    1005

1631

1080    1003

1002    1081

1001

403

1397

1004

FEEDBACK INFORAMTION GENERATING SECTION

TRANSMISSION/RECEPTION WEIGHT CALCULATING SECTION

MIMO TRANSMISSION MODE DETERMINING SECTION

RECEIVED QUALITY MEASURING SECTION

CHANNEL ESTIMATING SECTION

FEEDBACK INFORAMTION

1064

CQI DETERMINING SECTION

FB INFORMATION TRANSMITTING SECTION    1393

CQI INFORMATION

SELECTED TRANSMISSION MODE INFORMATION

119

1519

1607

1601

1398

1618

FEEDFORWARD INFORMATION

FEEDFORWARD INFORAMTION DEMODULATING SECTION

RETRANSMISSION STREAM MAPPING TABLE REFERRING SECTION

FF INFORAMTION RECEIVING SECTION    1394

FIG. 17

EP 1 879 317 A1

EP 1 879 317 A1

(a)

| | FIRST TIME D-TxAA TRANSMISSION | SECOND TIME EIGENVALUE TRANSMISSION | THIRD TIME D-TxAA TRANSMISSION | FOURTH TIME EIGENVALUE TRANSMISSION | FIFTH TIME D-TxAA TRANSMISSION | SIXTH TIME EIGENVALUE TRANSMISSION |
|---|---|---|---|---|---|---|
| FIRST STREAM | SG1 | SECOND EIGEN BEAM | SG1 | SECOND EIGEN BEAM | SG1 | SECOND EIGEN BEAM |
| SECOND STREAM | SG2 | FIRST EIGEN BEAM | SG2 | FIRST EIGEN BEAM | SG2 | FIRST EIGEN BEAM |

(b)

| | FIRST TIME D-TxAA TRANSMISSION | SECOND TIME D-TxAA TRANSMISSION | THIRD TIME EIGENVALUE TRANSMISSION | FOURTH TIME D-TxAA TRANSMISSION | FIFTH TIME D-TxAA TRANSMISSION | SIXTH TIME EIGENVALUE TRANSMISSION |
|---|---|---|---|---|---|---|
| FIRST STREAM | SG1 | SG2 | FIRST EIGEN BEAM | SG2 | SG1 | SECOND EIGEN BEAM |
| SECOND STREAM | SG2 | SG1 | SECOND EIGEN BEAM | SG1 | SG2 | FIRST EIGEN BEAM |

(c)

| | FIRST TIME EIGENVALUE TRANSMISSION | SECOND TIME EIGENVALUE TRANSMISSION | THIRD TIME D-TxAA TRANSMISSION | FOURTH TIME EIGENVALUE TRANSMISSION | FIFTH TIME EIGENVALUE TRANSMISSION | SIXTH TIME D-TxAA TRANSMISSION |
|---|---|---|---|---|---|---|
| FIRST STREAM | FIRST EIGEN BEAM | SECOND EIGEN BEAM | SG1 | FIRST EIGEN BEAM | SECOND EIGEN BEAM | SG1 |
| SECOND STREAM | SECOND EIGEN BEAM | FIRST EIGEN BEAM | SG2 | SECOND EIGEN BEAM | FIRST EIGEN BEAM | SG2 |

FIG. 18

## INTERNATIONAL SEARCH REPORT

| International application No. |
| --- |
| PCT/JP2006/310498 |

A. CLASSIFICATION OF SUBJECT MATTER
*H04J15/00*(2006.01)i, *H04B7/04*(2006.01)i

According to International Patent Classification (IPC) or to both national classification and IPC

B. FIELDS SEARCHED

Minimum documentation searched (classification system followed by classification symbols)
H04J15/00, H04B7/04

Documentation searched other than minimum documentation to the extent that such documents are included in the fields searched
Jitsuyo Shinan Koho          1922-1996     Jitsuyo Shinan Toroku Koho     1996-2006
Kokai Jitsuyo Shinan Koho     1971-2006     Toroku Jitsuyo Shinan Koho     1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2005-039807 A  (Matsushita Electric Industrial Co., Ltd.),<br>10 February, 2005 (10.02.05),<br>Par. Nos. [0057] to [0065], [0131] to [0160], [0178] to [0190]; Figs. 2, 15 to 18, 22, 23<br>& WO 2005/002103 A1 | 1,4,7,8<br>2,3,5,6 |
| Y<br>A | "3rd Generation Partnership Project; Technical Specification Group Radio Access Network; Multiple-Input Multiple-Output in UTRA", 3GPP TR 25.876 V1.7.0, August 2004, pages 31 to 32, www.3gpp.org/ftp/Specs/archive/25_series/ 25.876/25876-170.zip | 1,4,7,8<br>2,3,5,6 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>04 August, 2006 (04.08.06) | Date of mailing of the international search report<br>15 August, 2006 (15.08.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

<table>
<tr><td colspan="2" align="center">**INTERNATIONAL SEARCH REPORT**</td><td>International application No.<br>PCT/JP2006/310498</td></tr>
</table>

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2004/040833 A1  (Mitsubishi Denki Kabushiki Kaisha),<br>13 May, 2004 (13.05.04),<br>Full text; Figs. 1 to 2<br>& JP 2004-166232 A      & US 2004/0032910 A1<br>& EP 1563633 A1 | 2,3,5,6 |

Form PCT/ISA/210 (continuation of second sheet) (April 2005)

**EP 1 879 317 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005152094 A